# EUROPEAN PATENT SPECIFICATION

(11) **EP 3 957 523 B1**
(45) Date of publication and mention of the grant of the patent: **10.09.2025**
(21) Application number: 20790839.3
(22) Date of filing: 31.03.2020
(51) Int. Cl.: B60R 16/023, G05B 19/418, B60H 1/00, H04B 1/38, H04M 1/72454

(54) **INTEGRATED CHIP, VEHICLE CONTROL SYSTEM AND DEVICE, AND VEHICLE**
INTEGRIERTER CHIP, FAHRZEUGSTEUERUNGSSYSTEM UND VORRICHTUNG SOWIE FAHRZEUG
PUCE INTÉGRÉE, SYSTÈME ET DISPOSITIF DE COMMANDE DE VÉHICULE, ET VÉHICULE

(30) Priority: 13.04.2019 CN 201910296590
(43) Date of publication of application: 23.02.2022
(73) Proprietor: BYD Company Limited, Guangdong 518118 (CN)
(72) Inventor: XI, Hao, Shenzhen, Guangdong 518118 (CN); WANG, Jiangtao, Shenzhen, Guangdong 518118 (CN); HAO, Xingfeng, Shenzhen, Guangdong 518118 (CN)
(74) Representative: Dehns Germany Partnerschaft mbB
(86) International application number: PCT/CN2020/082578
(87) International publication number: WO 2020/211641

(56) References cited:
- EP-A2- 2 642 250
- EP-A2- 3 069 917
- WO-A1-2014/197730
- WO-A1-2017/220382
- WO-A1-2018/141016
- CN-A- 102 902 252
- CN-A- 104 021 662
- CN-A- 108 829 083
- CN-U- 205 632 352
- CN-U- 207 916 582
- KR-B1- 101 614 735
- US-A1- 2001 030 988
- US-A1- 2004 118 664
- US-A1- 2008 143 686
- US-A1- 2009 054 075
- US-A1- 2012 053 702
- US-A1- 2016 094 395
- US-A1- 2017 212 633
- US-A1- 2017 355 382
- US-A1- 2018 208 017

## Description

### FIELD

The present disclosure relates to the field of vehicle control, and particularly to an integrated chip, a vehicle control system and device, and a vehicle.

### BACKGROUND

With the continuous increase in the number of automobiles and the constant development of electronic control technologies, people have more and more diversified requirements for automobile functions. Therefore, generally various parts of the automobile need to be equipped with corresponding controllers. For example, the air conditioner corresponds to a temperature controller, the parking radar corresponds to a parking controller, the display screen corresponds to a display controller, and so on. In the related art, electrical logic control is realized by combinations of switches, relays, and wiring harness structures between the controllers. Because the controllers are scattered in different parts of the automobile body, the wiring harness is complicated and takes up much space in the automobile, making it difficult to maintain and resulting in a high failure rate. US 2009/054075 Al concerns satellite (GPS) assisted devices and processes for cellular terminals on asynchronous networks.

### SUMMARY

According to the invention an integrated chip, a vehicle control system and a vehicle are provided as set out in the claims. An objective of the present disclosure is to provide an integrated chip, a vehicle control system and device, and a vehicle, to solve the problems in the prior art that the low integration level of controllers in the vehicle leads to a high failure rate and occupation of much space in the vehicle.
To achieve the above objectives, a first aspect of the embodiments of the present disclosure provides an integrated chip, applicable to a vehicle, where the vehicle includes a wireless communication transceiver, a gateway transceiver, a display apparatus, a sound producing apparatus and an in-vehicle device;
the integrated chip integrates a control interface for the wireless communication transceiver, a control interface for the gateway transceiver, a control interface for the display apparatus, a control interface for the sound producing apparatus and a control interface for controlling the in-vehicle device;
the integrated chip is connected to the wireless communication transceiver via the control interface for the wireless communication transceiver, and is configured to control the wireless communication transceiver to implement wireless communication;
the integrated chip is connected to the gateway transceiver via the control interface for the gateway transceiver, and is configured to control the gateway transceiver to implement wired exchange of vehicle data;
the integrated chip is connected to the display apparatus via the control interface for the display apparatus, and is configured to control the display apparatus to implement information displaying;
the integrated chip is connected to the sound producing apparatus via the control interface for the sound producing apparatus, and is configured to control the sound producing apparatus to produce a sound; and
the integrated chip is connected to the in-vehicle device via the control interface for controlling the in-vehicle device, and is configured to implement control over the in-vehicle device.

Optionally, the vehicle further includes a thermal management apparatus, an air conditioner, and a driver, and the integrated chip further includes a driving interface; and
the integrated chip is connected to the driver via the driving interface, and the driver is configured to drive at least one of the thermal management apparatus, the air conditioner, the wireless communication transceiver, the gateway transceiver, the display apparatus, the sound producing apparatus or the in-vehicle device.

Optionally, the vehicle further includes a parking radar, and the integrated chip further includes a radar information sending and receiving interface; and
the integrated chip is connected to the parking radar via the radar information sending and receiving interface, and is configured to send a parking radar start signal and receive obstacle distance information, where the obstacle distance information is fed back from the parking radar; and
the integrated chip is configured to control the sound producing apparatus to sound an alarm tone or not according to the obstacle distance information.

Optionally, the vehicle further includes a sampling module, and the integrated chip further includes a sampling interface; and
the integrated chip is connected to the sampling module via the sampling interface, and is configured to obtain information acquired by the sampling module.

A second aspect of the embodiments of the present disclosure provides a vehicle control system, applicable to a vehicle, where the vehicle includes a wireless communication transceiver, a gateway transceiver, a display apparatus, a sound producing apparatus and an in-vehicle device;
the vehicle control system includes an integrated chip and a driving module connected to the integrated chip; a control unit for the wireless communication transceiver, a control unit for the gateway transceiver, a control unit for the display apparatus, a control unit for the sound producing apparatus and a control unit for the in-vehicle device are integrated in the integrated chip;
the integrated chip is connected to the wireless communication transceiver, and is configured to control the wireless communication transceiver to implement wireless communication;
the integrated chip is connected to the gateway transceiver, and is configured to control the gateway transceiver to implement wired exchange of vehicle data;
the integrated chip is connected to the display apparatus via the driving module, and is configured to control the driving module to drive the display apparatus to implement information displaying;
the integrated chip is connected to the sound producing apparatus via the driving module, and is configured to control the driving module to drive the sound producing apparatus to produce a sound; and
the integrated chip is connected to the in-vehicle device via the driving module, and is configured to control the driving module to drive the in-vehicle device to execute a corresponding operation.

Optionally, the control unit is implemented using at least one of a software program or a hardware circuit.

Optionally, the control unit is implemented using a software program;
the integrated chip controls, via a software program for the wireless communication transceiver, the wireless communication transceiver to implement wireless communication;
the integrated chip controls, via a software program for the gateway transceiver, the gateway transceiver to implement wired exchange of vehicle data;
the integrated chip controls, via a software program for the display apparatus, the driving module to drive the display apparatus to implement information displaying;
the integrated chip controls, via a software program for the sound producing apparatus, the driving module to drive the sound producing apparatus to produce a sound; and
the integrated chip controls, via a software program for the in-vehicle device, the driving module to drive the in-vehicle device to execute a corresponding operation.

Optionally, the control unit is implemented using a hardware circuit;
the integrated chip controls, via a hardware circuit for the wireless communication transceiver, the wireless communication transceiver to implement wireless communication;
the integrated chip controls, via a hardware circuit for the gateway transceiver, the gateway transceiver to implement wired exchange of vehicle data;
the integrated chip controls, via a hardware circuit for the display apparatus, the driving module to drive the display apparatus to implement information displaying;
the integrated chip controls, via a hardware circuit for the sound producing apparatus, the driving module to drive the sound producing apparatus to produce a sound; and
the integrated chip controls, via a hardware circuit for the in-vehicle device, the driving module to drive the in-vehicle device to execute a corresponding operation.

Optionally, the integrated chip and the driving module are integrated in a control circuit board.

Optionally, the integrated chip, the driving module, the wireless communication transceiver and the gateway transceiver are integrated in a control circuit board.

Optionally, the driving module includes a plurality of driving units;
the integrated chip drives, via at least one of the plurality of driving units, the display apparatus to implement information displaying;
the integrated chip drives, via at least one of the plurality of driving units, the sound producing apparatus to produce a sound; and
the integrated chip drives the in-vehicle device via at least one of the plurality of driving units.

Optionally, the in-vehicle device includes at least one of a vehicle light, a start button indicator, a relay coil, a vehicle door lock, a window lifter, a seat adjuster or a wiper motor.

Optionally, the vehicle further includes a thermal management apparatus, a control unit for the thermal management apparatus being integrated in the integrated chip; and

the integrated chip is connected to the thermal management apparatus via the driving module, and is configured to control the driving module to drive the thermal management apparatus, thereby implementing control over the thermal management apparatus.

Optionally, the vehicle further includes an air conditioner, a control unit for the air conditioner being integrated in the integrated chip; and
the integrated chip is connected to the air conditioner via the driving module, and is configured to control the driving module to drive the air conditioner.

Optionally, the vehicle further includes a parking radar; the system further includes a parking radar sending unit and a parking radar receiving unit;
a control unit for the parking radar is integrated in the integrated chip;
the integrated chip is connected to the parking radar sending unit, and is configured to control the parking radar sending unit to send a parking radar start signal;
the integrated chip is connected to the parking radar receiving unit, and is configured to control the parking radar receiving unit to receive obstacle distance information, where the obstacle distance information is fed back from the parking radar; and
the integrated chip is further configured to control the sound producing apparatus to sound an alarm tone or not according to the obstacle distance information.

Optionally, the integrated chip, the parking radar sending unit and the parking radar receiving unit are integrated in a control circuit board.

Optionally, the vehicle includes a smart key, the control unit for the wireless communication transceiver includes a control unit for the smart key, and
the integrated chip is wirelessly connected to the smart key, is configured to control the wireless communication transceiver to receive a control instruction for the smart key and control the vehicle according to the control instruction, and adjuster, is further configured to control the wireless communication transceiver to send a low-frequency signal to the smart key.

Optionally, the vehicle includes a tire pressure monitor, the control unit for the wireless communication transceiver includes a pressure monitoring unit, and
the integrated chip is wirelessly connected to the tire pressure monitor, and is configured to control the wireless communication transceiver to receive tire pressure information fed back from the tire pressure monitor and monitor the tire pressure information.

Optionally, the wireless communication transceiver includes a high-frequency receiver and a low-frequency transceiver; the control unit for the smart key includes a high-frequency signal receiving control unit and a low-frequency signal sending and receiving control unit;
the integrated chip is connected to the low-frequency transceiver, and is configured to control the low-frequency transceiver to perform low-frequency signal communication with the smart key;
the integrated chip is connected to the high-frequency receiver, and is configured to control the high-frequency receiver to receive a high-frequency signal; and
the integrated chip is configured to control the vehicle according to a high-frequency signal sent from the smart key.

Optionally, the wireless communication transceiver includes a Bluetooth module, and the control unit for the smart key includes a control unit for the Bluetooth module; and

the integrated chip is connected to the Bluetooth module, and is configured to control the Bluetooth module to establish a connection to the smart key, and perform Bluetooth communication with the smart key via the Bluetooth module.

Optionally, the wireless communication transceiver includes a high-frequency receiver;
the integrated chip is connected to the high-frequency receiver, and is configured to control the high-frequency receiver to receive a high-frequency signal sent by a tire pressure monitor of the vehicle; and
the integrated chip is configured to obtain tire pressure information according to the high-frequency signal, and control the display apparatus to display the tire pressure information.

Optionally, the vehicle control system further includes a power module configured to supply power to the vehicle control system, and a control unit for the power module is integrated in the integrated chip; and

the integrated chip is connected to the power module, and is configured to control the power module.

Optionally, the integrated chip and the power module are integrated in a control circuit board.

Optionally, the integrated chip, the driving module, the wireless communication transceiver, the gateway transceiver and the power module are integrated in a control circuit board.

Optionally, the system further includes a sampling module; and
the integrated chip is connected to the sampling module, and is configured to obtain information acquired by the sampling module.

Optionally, the information acquired by the sampling module includes a vehicle speed signal; and
the integrated chip is configured to, when the vehicle speed signal acquired by the sampling module is greater than or equal to a preset speed threshold, control the sound producing apparatus to sound an engine simulation prompt tone.

A third aspect of the embodiments of the present disclosure provides a vehicle control device, including a vehicle control system according to the second aspect of the embodiments of the present disclosure, and a display apparatus connected to the vehicle control system.

Optionally, the display apparatus is a dashboard.

A fourth aspect of the embodiments of the present disclosure provides a vehicle, including a dashboard, a sound producing apparatus, an in-vehicle device and a vehicle control device according to the third aspect of the embodiments of the present disclosure, where
the vehicle control device is mounted on the dashboard, and the vehicle control device is connected to the sound producing apparatus and the in-vehicle device.

Optionally, the display apparatus of the vehicle control device faces a cab of the vehicle.

Optionally, the vehicle further includes a thermal management apparatus, an air conditioner, a parking radar, a smart key and a tire pressure monitor; and
the vehicle control device is connected to the thermal management apparatus, the air conditioner and the parking radar, and is wirelessly connected to the smart key and the tire pressure monitor.

Based on the above technical solutions, in the present disclosure, a vehicle includes a wireless communication transceiver, a gateway transceiver, a display apparatus, a sound producing apparatus and an in-vehicle device. The integrated chip integrates a control interface for the wireless communication transceiver, a control interface for the gateway transceiver, a control interface for the display apparatus, a control interface for the sound producing apparatus and a control interface for controlling the in-vehicle device. The integrated chip is connected to the wireless communication transceiver via the control interface for the wireless communication transceiver, and is configured to control the wireless communication transceiver to implement wireless communication. The integrated chip is connected to the gateway transceiver via the control interface for the gateway transceiver, and is configured to control the gateway transceiver to implement wired exchange of vehicle data. The integrated chip is connected to the display apparatus via the control interface for the display apparatus, and is configured to control the display apparatus to implement information displaying. The integrated chip is connected to the sound producing apparatus via the control interface for the sound producing apparatus, and is configured to control the sound producing apparatus to produce a sound. The integrated chip is connected to the in-vehicle device via the control interface for controlling the in-vehicle device, and is configured to implement control over the in-vehicle device. By integrating the functions of the control modules corresponding to the various devices on the vehicle, failures caused by complex circuits are avoided, and the integration level of the control modules of the vehicle is increased, thereby saving space in the vehicle and reducing the failure rate, electromagnetic interference and manufacturing costs.

Other features and advantages of the present disclosure will be described in detail in the following detailed description.

### BRIEF DESCRIPTION OF THE DRAWINGS

The foregoing and/or additional aspects and advantages of the present disclosure will become apparent and comprehensible in the description made with reference to the following accompanying drawings. In the figures:
FIG. 1 is a schematic structural diagram of an integrated chip according to one or more embodiments of the present disclosure;
FIG. 2 is a schematic structural diagram of an integrated chip according to one or more embodiments of the present disclosure;
FIG. 3 is a schematic structural diagram of an integrated chip according to one or more embodiments of the present disclosure;
FIG. 4 is a schematic structural diagram of an integrated chip according to one or more embodiments of the present disclosure;
FIG. 5 is a schematic structural diagram of an integrated chip according to one or more embodiments of the present disclosure;
FIG. 6a is a schematic structural diagram of a vehicle control system according to one or more embodiments of the present disclosure;
FIG. 6b is a schematic structural diagram of a vehicle control system according to one or more embodiments of the present disclosure;
FIG. 7 is a schematic structural diagram of a vehicle control system according to one or more embodiments of the present disclosure;
FIG. 8 is a schematic structural diagram of a vehicle control device according to one or more embodiments of the present disclosure; and
FIG. 9 is a schematic structural diagram of a vehicle according to one or more embodiments of the present disclosure.

### DETAILED DESCRIPTION

The exemplary embodiments are described herein in detail, and examples of the embodiments are shown in the accompanying drawings. When the following descriptions are made with reference to the accompanying drawings, unless otherwise indicated, same numbers in different accompanying drawings represent same or similar elements. The implementations described in the following exemplary embodiments do not represent all implementations consistent with this disclosure. On the contrary, the implementations are merely examples of apparatuses and methods that are described in detail in the appended claims and that are consistent with some aspects of this disclosure.

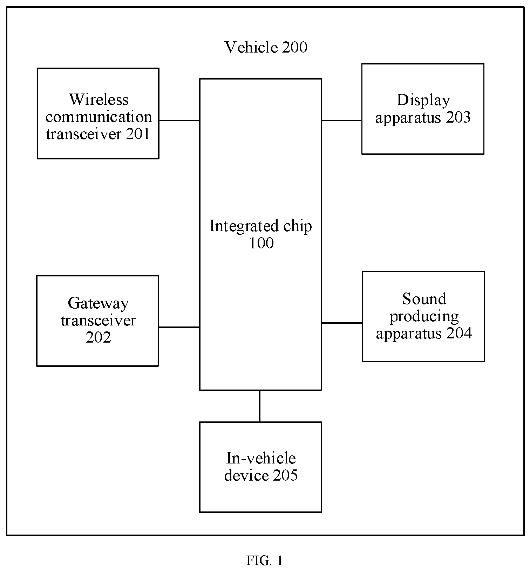

FIG. 1 is a schematic structural diagram of an integrated chip according to one or more embodiments of the present disclosure. As shown in FIG. 1, the integrated chip 100 may be applied to a vehicle 200. The vehicle 200 may include, but not limited to, a wireless communication transceiver 201, a gateway transceiver 202, a display apparatus 203 (which may be, for example, an instrument panel, a center console display screen, or a multimedia screen), a sound producing apparatus 204 (which may be, for example, a speaker, a buzzer, or an engine sound simulator) and an in-vehicle device 205.

In this embodiment of the present disclosure, the integrated chip 100 integrates a control interface for the wireless communication transceiver, a control interface for the gateway transceiver, a control interface for the display apparatus, a control interface for the sound producing apparatus and a control interface for controlling the in-vehicle device.

The integrated chip 100 may be connected to the wireless communication transceiver 201 via the control interface for the wireless communication transceiver, and is configured to control the wireless communication transceiver 201 to implement wireless communication.

The integrated chip 100 may be connected to the gateway transceiver 202 via the control interface for the gateway transceiver, and is configured to control the gateway transceiver 202 to implement wired exchange of vehicle data.

The integrated chip 100 may be connected to the display apparatus 203 via the control interface for the display apparatus, and is configured to control the display apparatus 203 to implement information displaying.

The integrated chip 100 may be connected to the sound producing apparatus 204 via the control interface for the sound producing apparatus, and is configured to control the sound producing apparatus 204 to produce a sound.

The integrated chip 100 may be connected to the in-vehicle device 205 via the control interface for controlling the in-vehicle device, and is configured to implement control over the in-vehicle device 205. In the embodiments of this application, the control interface for controlling the in-vehicle device may be construed as a control interface for controlling the in-vehicle device in an original body control module (BCM) of the vehicle. In other words, in this application, control modules (for example, control interfaces) for other devices (for example, the wireless communication transceiver, the gateway transceiver, the display apparatus, and the sound producing apparatus) on the vehicle are all integrated in the original BCM on the vehicle to form an integrated vehicle body controller. The integrated vehicle body controller may be construed as the integrated chip described in the embodiments of this application. In other words, in this application, the control interfaces for other devices (for example, the wireless communication transceiver, the gateway transceiver, the display apparatus, and the sound producing apparatus) on the vehicle and control interfaces for controlling in-vehicle devices in the original BCM on the vehicle are all integrated together to form the integrated chip, so that the in-vehicle device can be correspondingly controlled via a control interface for controlling the vehicle body controller in the integrated chip.

For example, the integrated chip 100 may be, for example, a system on chip (SOC). The integrated chip 100 may integrate multiple control interfaces corresponding to multiple devices on the vehicle 200, and is configured to be connected to the multiple devices and control the multiple devices via the multiple control interface controls. For example, the integrated chip 100 may include: a control interface for the wireless communication transceiver, a control interface for the gateway transceiver, a control interface for the display apparatus, a control interface for the sound producing apparatus and a control interface for controlling the in-vehicle device. The integrated chip 100 may be connected to the wireless communication transceiver 201 via the control interface for the wireless communication transceiver, and is configured to control the wireless communication transceiver 201 to implement wireless communication, and may further be connected to the gateway transceiver 202 via the control interface for the gateway transceiver, to control the gateway transceiver 202 to implement wired exchange of vehicle data. Further, the integrated chip 100 may further be connected to the display apparatus 203 via the control interface for the display apparatus to control the display apparatus 203 to implement information displaying, be connected to the sound producing apparatus 204 via the control interface for the sound producing apparatus to control the sound producing apparatus 204 to produce a sound, and be connected to the in-vehicle device 205 via the control interface for controlling the in-vehicle device to implement control over the in-vehicle device 205. Therefore, by integrating the control interfaces for the wireless communication transceiver, the gateway transceiver, the display apparatus, the sound producing apparatus and the in-vehicle device on the vehicle into one chip, i.e., integrating the control functions corresponding to such devices as the wireless communication transceiver, the gateway transceiver, the display apparatus, the sound producing apparatus and the in-vehicle device into one chip, the integrated chip can implement control over the wireless communication transceiver, the gateway transceiver, the display apparatus, the sound producing apparatus and the in-vehicle device, so that failures caused by complex circuits can be avoided, and the integration level of the control modules of the vehicle is increased.

It should be noted that the control interface may include a hardware interface, and may also include a software interface. The software interface may be implemented by programming a software program in the integrated chip. The hardware interface may be formed by an interface circuit in the integrated chip and a pin connected thereto.

In addition, in this embodiment of this application, the control interface for controlling the in-vehicle device in the original BCM on the vehicle is integrated in the integrated chip, while keeping other functions and modules in the original BCM. For example, the BCM may be configured to acquire a device state of the in-vehicle device 205, and send the device state to the integrated chip 100. After receiving the device state acquired by the BCM, the integrated chip 100 may send the device state to the display apparatus 203, so that the display apparatus 203 displays the device state. The in-vehicle device 205 may be any device arranged on the vehicle body, for example, a vehicle light, a vehicle door, a rear-view mirror, a window, a seat, or a wiper. The device state may include: a seat belt signal, a seat sensor signal, a light signal, a door and bonnet status signal, an adaptive cruise control (ACC) system demand signal, engine anti-theft (power source anti-theft), a horn relay signal, a start button signal, and the like.

For example, the integrated chip 100 may implement functions such as light control, power mode and power level control, exterior rear view mirror unfolding/folding control, vehicle body state control, door state control, wiper control and relay control via the control interface for controlling the in-vehicle device. The original BCM on the vehicle may include at least one multi-channel input switch detection chip, at least one multi-channel analog multiplexing chip and at least one level acquisition chip. The multi-channel input switch detection chip may be configured to acquire: a plurality of switch signals such as door lock, brake fluid level, power source, vehicle light, seat belt, bonnet, tire pressure reset switch, seat heating, button switch and the like. The multi-channel analog multi-channel multiplexing chip may be configured to acquire: analog signals such as driver seat temperature, medium voltage signal, motor feedback circuits, high voltage signal, sunlight sensor and the like. The level acquisition chip may be configured to acquire: pulse signals such as wiper, vehicle speed, collision unlock, blower and battery heat pipe pump signal and the like. The pulse signals may be pulse width modulation (PWM) signals.

The original BCM on the vehicle may further include: a plurality of multi-channel high-side switch chips for driving high-power lighting devices (for example, front and rear headlights, front and rear small lights, steering lights, brake lights, etc.) and steering shaft lock of the vehicle; a plurality of multi-channel low-side switch chips for driving a wiper switch relay, a wiper speed relay, a high beam relay and a central control switch indicator relay, etc.; and a plurality of multi-channel low-side/high-side optional switch chips for driving a blower relay, a small light relay, an alarm light switch indicator, a front defrost button indicator, an IG relay (unloading relay), an ACC relay, a wiper relay, a parking radar probe power supply and other loads. The original BCM on the vehicle may further include: a plurality of full bridge motor driving chips for controlling rotation of the motor of the vehicle to drive locking/unlocking of a charging connector, folding/unfolding of the exterior rear view mirror, and locking/unlocking of doors (including driver side door, trunk door, and all passenger side doors).

It is to be appreciated that because the integrated chip 100 integrates control interfaces corresponding to a plurality of devices on the vehicle, the corresponding devices can be controlled via the control interfaces on the integrated chip. In this way, the number of chips is reduced, and a large number of components required in the numerous chips are saved. Therefore, the solution of the present disclosure can increase the integration level of the vehicle and avoids the connection lines between the plurality of devices. Because the number of connection lines in the vehicle is reduced, space inside the vehicle is saved, and failures caused by connection line errors, poor contact, etc. can be reduced, thereby reducing the failure rate, electromagnetic interference and manufacturing costs. In addition, various functional programs in the same integrated chip can be called more easily, which can make the control more precise and the functions more powerful.

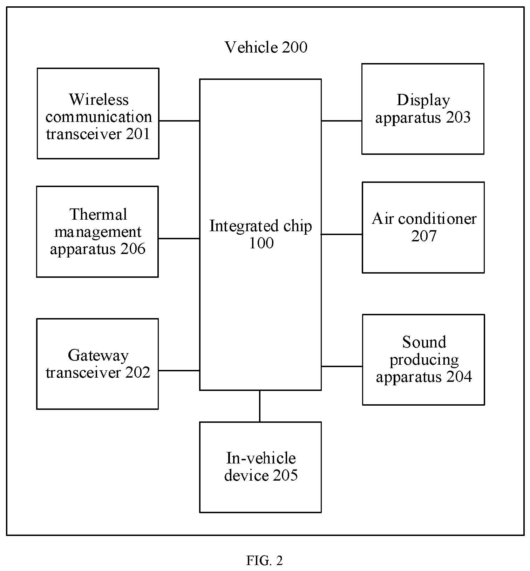

FIG. 2 is a schematic structural diagram of an integrated chip according to one or more embodiments of the present disclosure. Based on FIG. 1, as shown in FIG. 2, the vehicle 200 further includes a thermal management apparatus 206, an air conditioner 207, and a driver. The integrated chip 100 further includes a driving interface.

The integrated chip 100 is connected to the driver via the driving interface. The driver is configured to drive at least one of the thermal management apparatus 206, the air conditioner 207, the wireless communication transceiver 201, the gateway transceiver 202, the display apparatus 203, the sound producing apparatus 204 or the in-vehicle device 205. In this way, the integrated chip 100 can drive a plurality of devices via the driving interface, which not only reduces the number of connection lines in the vehicle, but also saves a large number of components required by the driver and increases the functionality of the integrated chip 100, thereby expanding the scope of application of the integrated chip 100. It should be noted that the driver is not shown in FIG. 2.

For example, the vehicle 200 may further include a thermal management apparatus 206, an air conditioner 207, and a driver. The driver is connected to the integrated chip 100 via the driving interface on the integrated chip. The driver is configured to drive at least one of the thermal management apparatus 206, the air conditioner 207, the wireless communication transceiver 201, the gateway transceiver 202, the display apparatus 203, the sound producing apparatus 204 or the in-vehicle device 205.

In this embodiment of the present disclosure, a plurality of devices may be driven by one driver, thereby increasing the functionality of the driver and expanding the scope of application of the driver.

In another embodiment, the vehicle 200 further includes a thermal management apparatus 206, an air conditioner 207, and a plurality of driving units. The integrated chip 100 further includes a driving interface.

As an example, the integrated chip 100 may be connected to the plurality of driving units via the driving interface. The plurality of driving units may be configured to drive vehicle-mounted apparatus. The vehicle-mounted apparatus may include at least one of the thermal management apparatus 206, the air conditioner 207, the display apparatus 203, the sound producing apparatus 204 or the in-vehicle device 205. In this embodiment of the present disclosure, the integrated chip 100 can realize driving via the plurality of driving units, which reduces the load of one driver and improves the driving efficiency.

In this embodiment of the present disclosure, the driving unit may be implemented by software, for example, the driving unit may be a chip storing a driver program; or the driving unit may be implemented by hardware, for example, the driving may be realized by a driving circuit; or the driving unit may be a combination of a driving chip and a driving circuit corresponding to the vehicle-mounted apparatus. The driving unit and the integrated chip may be integrated on the same control circuit board to further improve the integration level of the vehicle and reduce the number of connection lines.

It should be noted that different driving units may drive different devices, or one device may be driven by a plurality of driving units. For example, the plurality of driving units may be six driving units: driving unit 1, driving unit 2, driving unit 3, driving unit 4, driving unit 5, and driving unit 6. For example, driving of the thermal management apparatus may be realized via the driving unit 1, the driving unit 2 and the driving unit 3, driving of the air conditioner may be realized via the driving unit 1, the driving unit 2 and the driving unit 4, driving of the display apparatus may be realized via the driving unit 2, the driving unit 3 and the driving unit 5, driving of the sound producing apparatus may be realized via the driving unit 5 and the driving unit 6, and so on. The above descriptions are merely examples and are not intended to limit the present disclosure.

It should be noted that, the thermal management apparatus 206 may be a fan or pump, and the integrated chip 100 may drive the fan or pump via the driver or the driving unit to adjust the temperature of other devices (such as a battery of the vehicle or an engine of the vehicle) on the vehicle. For example, the integrated chip 100 may drive the air conditioner 207 via the driving interface, to control the working mode (for example, cooling, heating, ventilation, etc.), temperature, and on/off state of the air conditioner 207, so as to adjust the temperature inside the vehicle 200.

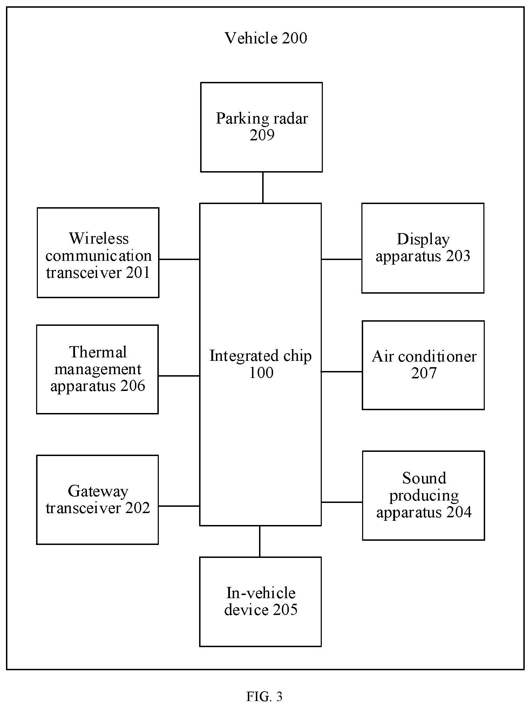

FIG. 3 is a schematic structural diagram of an integrated chip according to one or more embodiments of the present disclosure. As shown in FIG. 3, the vehicle 200 further includes a parking radar 209, and the integrated chip 100 further includes a radar information sending and receiving interface.

The integrated chip 100 is connected to the parking radar 209 via the radar information sending and receiving interface, and is configured to send a start signal of the parking radar 209 and receive obstacle distance information. The obstacle distance information is fed back from the parking radar.

The integrated chip 100 is configured to control the sound producing apparatus to sound an alarm tone or not according to the obstacle distance information.

In this way, by integrating the parking radar information sending and receiving interface on the integrated chip 100, reversing or parking control can be performed through the integrated chip 100, which expands the control function of the integrated chip 100. In addition, a parking or parking warning function can be realized through the joint control over the parking radar 209 and the sound producing apparatus 204, thereby providing more diversified functions and improving user experience.

For example, when the vehicle is reversing, the driver may not be able to see the area behind the vehicle, which is likely to cause an accident. Therefore, the parking radar 209 can be used to acquire obstacle distance information, which may be understood as information about obstacle information within a preset range of the environment where the vehicle is currently located. After acquiring the obstacle distance information, the integrated chip 100 may compare the obstacle distance information with a preset threshold. When the obstacle distance information is less than or equal to the preset threshold, the sound producing apparatus 204 is controlled to sound an alarm tone. When the obstacle distance information is greater than the preset threshold, the sound producing apparatus 204 is controlled not to sound an alarm tone. Therefore, the driver can be warned in time to take emergency avoidance, to avoid collision with obstacles, thereby improving the safety of the vehicle.

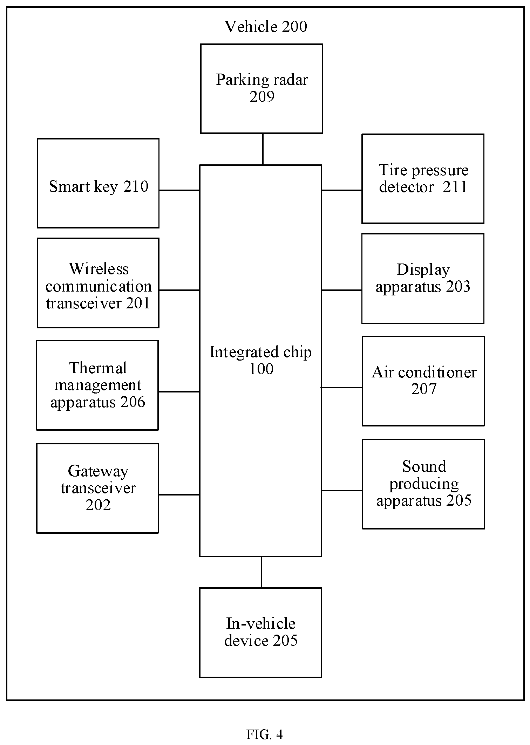

FIG. 4 is a schematic structural diagram of an integrated chip according to one or more embodiments of the present disclosure. As shown in FIG. 4, the vehicle 200 includes a smart key 210 and/or a tire pressure monitor 211, and the control interface for the wireless communication transceiver includes a control interface for the smart key and/or a control interface for the tire pressure monitor. In this way, the smart key 210 and the tire pressure monitor 211 can be controlled through the integrated chip 100, which further expands the functions of the integrated chip 100 and widens the scope of application of the smart chip.

As an example, when the integrated chip 100 includes the control interface for the smart key, the integrated chip 100 can be wirelessly connected to the smart key 210 through the control interface for the smart key, and is configured to control the wireless communication transceiver 201 to realize the control over the smart key 210.

It should be noted that when the smart key 210 and the integrated chip 100 perform wireless communication via high-frequency signals or low-frequency signals, the wireless communication transceiver 201 may include a high-frequency receiver and a low-frequency transceiver, and correspondingly, the control interface for the smart key further includes a high-frequency signal receiving interface and a low-frequency signal sending and receiving interface.

In this embodiment of the present disclosure, the integrated chip 100 may be wirelessly connected to the low-frequency transceiver via the low-frequency signal sending and receiving interface, and is configured to control the low-frequency transceiver 210 to perform low-frequency signal communication with the smart key. The integrated chip is wirelessly connected to the high-frequency receiver via the high-frequency signal receiving interface, and is configured to control the high-frequency receiver to receive a high-frequency signal. The integrated chip 100 is configured to control the corresponding in-vehicle device 205 according to a high-frequency signal sent from the smart key 210.

In this way, the communication between the wireless communication transceiver 201 and the smart key 210 can be controlled through the integrated chip 100, which expands the control function of the integrated chip 100, and realizes the control of the vehicle 200 by the smart key 210 through the integrated chip 100, thereby enriching the control scenarios for the smart key 210.

For example, the smart key 210 sends out a control instruction for controlling the in-vehicle device 205 bound to the smart key 210 (for example, opening the trunk, unlocking the door, etc.). The control instruction is a high-frequency signal. The integrated chip 100 controls, via the high-frequency signal receiving interface, the high-frequency signal receiver to receive the control instruction, and then controls the corresponding in-vehicle device 205 according to the control instruction (for example, opens the trunk or unlocks the door).

When the position of the smart key 210 needs to be located, the integrated chip 100 may further control the low-frequency transceiver to send a positioning instruction via the low-frequency signal sending and receiving interface. The positioning instruction is a low-frequency signal. After receiving the positioning instruction, the smart key 210 sends feedback information including position information of the smart key 210 to the integrated chip 100. The feedback information is sent in the form of a high-frequency signal. After receiving the feedback information via the high-frequency receiver, the integrated chip 100 can determine the position of the smart key 210, and further, may control the display apparatus 203 to display the position information of the smart key. It should be noted that when the smart key 210 is at a low battery level, the smart key 210 may also send a battery level instruction. In order to save power, the battery level instruction may be a low-frequency signal. In this case, the integrated chip 100 uses the low-frequency transceiver to receive the battery level prompt instruction.

In another implementation, the smart key 210 and the integrated chip 100 may communicate wirelessly through Bluetooth signals. It should be noted that the wireless communication transceiver 201 may include a Bluetooth module, and the control interface for the smart key further includes a Bluetooth interface.

Optionally, the integrated chip 100 may communicate with the Bluetooth module via the Bluetooth interface, and is configured to control the Bluetooth module to establish a connection to the smart key 210, and perform Bluetooth communication with the smart key 210 via the Bluetooth module.

For example, the control instruction, the feedback information, and the battery level prompt instruction sent by the smart key 210 may all be sent to the integrated chip 100 in the form of Bluetooth signals. Similarly, the integrated chip 100 may use a Bluetooth module to receive the control instruction, the feedback information, and the battery level prompt instruction sent by the smart key 210, and may also send the positioning instruction to the smart key 210 in the form of a Bluetooth signal.

In the above two implementations, the integrated chip 100 provides multiple ways to connect with the smart key 210, so as to increase the matching degree between the integrated chip 100 and the smart key 210, and increase the applicability of the integrated chip 100.

In addition, the integrated chip 100 may be wirelessly connected to the tire pressure monitor 211 via the control interface for the tire pressure monitor, and is configured to receive and monitor feedback information from the tire pressure monitor 211.

It should be noted that for the tire pressure monitor 211, the wireless communication transceiver 201 may include a high-frequency receiver, and the control interface for the tire pressure monitor may include a high-frequency signal receiving interface.

Therefore, the integrated chip 100 may be connected to the high-frequency receiver via the high-frequency signal receiving interface, and is configured to control the high-frequency receiver to receive a high-frequency signal sent by the tire pressure monitor 211 of the vehicle 200.

As an example, the integrated chip 100 may be configured to obtain tire pressure information according to the high-frequency signal, and control the display apparatus 203 to display the tire pressure information via the control interface for the display apparatus.

In this way, the communication between the wireless communication transceiver 201 and the tire pressure monitor 211 can be controlled through the integrated chip 100, which expands the control function of the integrated chip 100, and realizes the control of the tire pressure monitor 211 through the integrated chip 100, thereby enriching the control scenarios for the integrated chip 100.

For example, the tire pressure monitor 211 (which is, for example, a pressure sensor disposed on a tire of the vehicle) may send tire pressure information to the integrated chip based on a preset period. The tire pressure information is sent in the form of a high-frequency signal. The integrated chip 100 controls, via the high-frequency signal receiving interface, the high-frequency signal receiver to receive the tire pressure information, and then may control, according to the tire pressure information, the display apparatus 203 to display the tire pressure information.

It should be noted that, in addition to controlling the wireless communication transceiver 201 to implement wireless communication with the smart key 210 and the tire pressure monitor 211 of the vehicle, the integrated chip 100 may also implement wireless communication with a server. For example, the server may be a location server used for path planning and vehicle positioning. For example, the integrated chip 100 may send the current location information of the vehicle 200 to the location server through the wireless communication transceiver 201. The location server finds the nearest parking space to the vehicle according to the current location information of the vehicle 200. This provides assistance for parking of the vehicle and improves user experience. For another example, the integrated chip 100 may also send the current location information of the vehicle 200 and a target location requested by the user to the location server through the wireless communication transceiver 201, and the location server performs path planning according to the current location information of the vehicle 200, and sends a planned path to the integrated chip 100, thereby improving the convenience of driving for the user.

The server may also be a vehicle server for shared vehicles or network car-hailing. For example, when the server is for shared vehicles, the integrated chip 100 may send the current usage status ("occupied" or "idle") of the vehicle 200 through the wireless communication transceiver 201 to the server, and the server determines whether the vehicle 200 can be shared according to the current usage status of the vehicle 200. For another example, the integrated chip 100 may also send the current driving route of the vehicle 200 to the server through the wireless communication transceiver 201, and the server confirms the current driving route of the vehicle 200, and determines whether the driving route matches a target route of the user who initiates the car-hailing request to the server.

It should be noted that the above-mentioned location server and vehicle server are merely examples, and the server may also be other application servers capable of communicating with vehicles, for example, a query server for querying traffic violation events, which is not limited in the present disclosure.

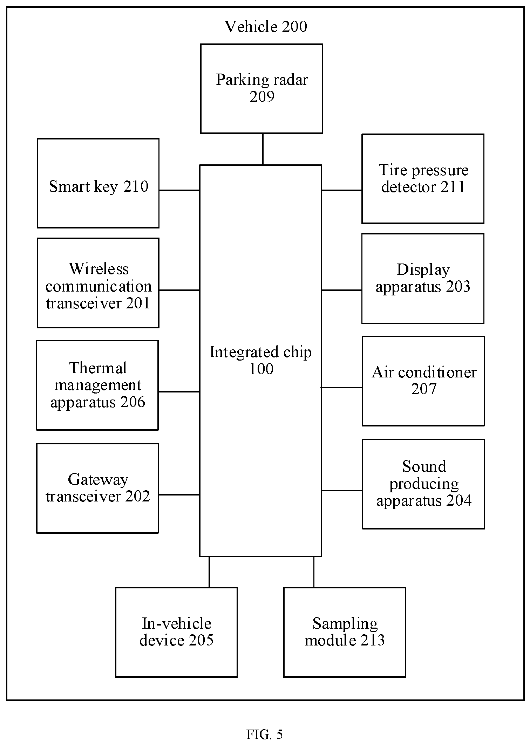

FIG. 5 is a schematic structural diagram of an integrated chip according to one or more embodiments of the present disclosure. Based on FIG. 4. as shown in FIG. 5, the vehicle 200 further includes a sampling module 213, and the integrated chip 100 further includes a sampling interface.

Optionally, the integrated chip 100 is connected to the sampling module 213 via the sampling interface, and is configured to obtain information acquired by the sampling module 213.

For example, the vehicle 200 may further include a sampling module 213. Correspondingly, the integrated chip 100 may further include a sampling interface. The integrated chip 100 is connected to the sampling module 213 via the sampling interface, so that the integrated chip 100 can obtain information acquired by the sampling module 213. The sampling module 213 may be a module such as a radar, a camera, or an infrared detector on the vehicle 200, and various status information may include the current speed of the vehicle 200, information about obstacles around the vehicle 200, and the like. After receiving the information acquired by the sampling module 213, the integrated chip 100 may execute a corresponding control strategy according to the received information.

For example, the information acquired by the sampling module 213 may include a vehicle speed signal.

In this case, when the vehicle speed signal acquired by the sampling module 213 is greater than or equal to a preset speed threshold, the integrated chip 100 may control, via the control interface for the sound producing apparatus, the sound producing apparatus 204 to sound an engine simulation prompt tone.

It is to be understood that considering that a high speed of the vehicle (for example, greater than 30 km/h) endangers pedestrians around the vehicle and it is much easier for pedestrians around the vehicle to avoid when the vehicle is at a low speed, a preset speed threshold may be set, and a prompt is provided when the speed of the vehicle reaches the preset speed threshold. In a possible implementation, the sampling module 213 may be configured to acquire the speed of the vehicle and send the speed of the vehicle to the integrated chip 100, and when the speed is greater than or equal to the preset speed threshold, the integrated chip 100 controls the sound producing apparatus 204. to sound a prompt tone (for example, an engine simulation prompt tone, etc.). In this way, pedestrians and vehicles around the vehicle can be warned that the current speed is relatively fast, thereby improving the safety of the vehicle during driving.

It should be noted that the integrated chip 100 may further determine a target pitch according to the vehicle speed, and then control the sound producing apparatus 204 to sound a prompt tone at the target pitch. For example, when the sound producing apparatus 204 is sounding a prompt tone, if the vehicle 200 continues to accelerate, the sound producing apparatus 204 may be controlled to gradually increase the pitch of the prompt tone; if the vehicle 200 decelerates, the sound producing apparatus 204 may be controlled to gradually decrease the pitch of the prompt tone. In this way, the pitch of the prompt tone can be flexibly adjusted according to the vehicle speed, which increases the flexibility of vehicle control.

In a possible implementation of the embodiments of this application, the sampling module 213 may further be configured to acquire a device state of the in-vehicle device 205, and send the device state to the integrated chip 100. After receiving the device state acquired by the sampling module 213, the integrated chip 100 may send the device state to the display apparatus 203, so that the display apparatus 203 displays the device state. That is to say, in this embodiment of the present application, the control interface for controlling the in-vehicle device in the existing BCM on the vehicle is integrated into the above integrated chip, and the acquisition function for acquiring the device status in the existing BCM on the vehicle is integrated into the above sampling module 213, so that modules with the same function are integrated together, thereby improving the degree of integration between the modules in the vehicle.

Based on the above, the integrated chip 100 provided by the present disclosure can integrate a plurality of control interfaces to implement control over a plurality of vehicle-mounted devices, thereby reducing the number of connection lines in the vehicle. Because the number of connection lines in the vehicle is reduced, space inside the vehicle is saved, and failures caused by connection line errors, poor contact, etc. can be reduced, thereby reducing the failure rate, electromagnetic interference and manufacturing costs. In addition, more control functions can be expanded to improve the controllability of the vehicle and enrich the control scenarios for the vehicle, thereby improving user experience.

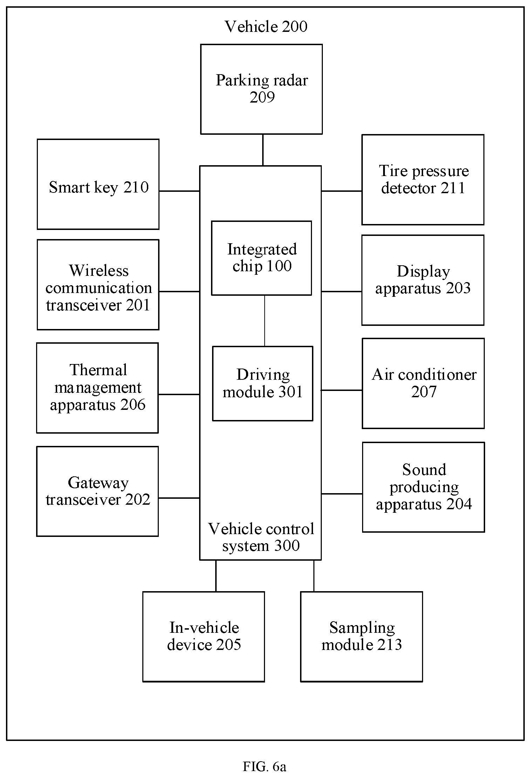

FIG. 6a is a schematic structural diagram of a vehicle control system according to one or more embodiments of the present disclosure. As shown in FIG. 6a, the system 300 may be applied to a vehicle 200. The vehicle 200 may include, but not limited to, a wireless communication transceiver 201, a gateway transceiver 202, a display apparatus 203, a sound producing apparatus 204 and an in-vehicle device 205.

In this embodiment of the present disclosure, the vehicle control system 300 may include an integrated chip 100 and a driving module 301 connected to the integrated chip 100. A control unit for the wireless communication transceiver, a control unit for the gateway transceiver, a control unit for the display apparatus, a control unit for the sound producing apparatus and a control unit for the in-vehicle device are integrated in the integrated chip 100.

The integrated chip 100 is connected to the wireless communication transceiver 201, and is configured to control the wireless communication transceiver 201 to implement wireless communication.

The integrated chip 100 is connected to the gateway transceiver 202, and is configured to control the gateway transceiver 202 to implement wired exchange of vehicle data.

The integrated chip 100 is connected to the display apparatus 203 via the driving module 301, and is configured to control the driving module 301 to drive the display apparatus 203 to implement information displaying.

The integrated chip 100 is connected to the sound producing apparatus 204 via the driving module 301, and is configured to control the driving module 301 to drive the sound producing apparatus 204 to produce a sound.

The integrated chip 100 is connected to the in-vehicle device 205 via the driving module 301, and is configured to control the driving module 301 to drive the in-vehicle device 205 to execute a corresponding operation.

For example, the vehicle control system 300 may include an integrated chip 100 and a driving module 301. The integrated chip 100 is connected to the driving module 301. The integrated chip 100 may be, for example, a type of SOC, which integrates various control units corresponding to various devices on the vehicle, and can perform functions indicated by these control units. The control units may be, for example, software programs for realizing the corresponding functions, or may be hardware circuits. For example, the integrated chip 100 may include a control unit for the wireless communication transceiver, a control unit for the gateway transceiver, a control unit for the display apparatus, a control unit for the sound producing apparatus and a control unit for the in-vehicle device. Because the integrated chip 100 integrates control units corresponding to a plurality of devices on the vehicle, the integration level of the vehicle is increased and the connection lines between the plurality of devices are avoided. Because the number of connection lines in the vehicle is reduced, space inside the vehicle is saved, and failures caused by connection line errors, poor contact, etc. can be reduced, thereby reducing the failure rate, electromagnetic interference and manufacturing costs.

The integrated chip 100 is connected to the wireless communication transceiver 201, the gateway transceiver 202, the display apparatus 203, the sound producing apparatus 204 and the in-vehicle device 205. For example, the integrated chip 100 may be provided with various control interfaces. The wireless communication transceiver 201 may be connected to the integrated chip 100 via a wireless interface. The gateway transceiver 202 may be connected to the integrated chip 100 via a gateway interface. The display apparatus may be connected to the integrated chip 100 via a display interface. The sound producing apparatus 204 may be connected to the integrated chip 100 via an audio interface. The in-vehicle device 205 may be connected to the integrated chip 100 via an in-vehicle device driving interface.

The in-vehicle device 205 may include at least one of a vehicle light, a start button indicator, a relay coil, a vehicle door lock, a window lifter, a seat adjuster or a wiper motor. The system 300 further includes a sampling module 213.

The integrated chip 100 is connected to the sampling module 213, and is configured to obtain information acquired by the sampling module 213.

For example, the information acquired by the sampling module 213 may include a vehicle speed signal.

The integrated chip 100 is configured to, when the vehicle speed signal acquired by the sampling module 213 is greater than or equal to a preset speed threshold, control the sound producing apparatus to sound an engine simulation prompt tone.

The functions implemented by the vehicle control system 300 in the foregoing embodiments have been described in detail in the foregoing integrated chip embodiments, and will not be repeated here.

It should be noted that in the vehicle control system 300, the control unit may be implemented using at least one of a software program or a hardware circuit.

For example, when the control unit is implemented using a software program, the integrated chip 100 may control, via a software program for the wireless communication transceiver 201, the wireless communication transceiver 201 to implement wireless communication. The integrated chip 100 controls, via a software program for the gateway transceiver 202, the gateway transceiver 202 to implement wired exchange of vehicle data. The integrated chip 100 controls, via a software program for the display apparatus 203, the driving module 301 to drive the display apparatus 203 to implement information displaying. The integrated chip 100 controls, via a software program for the sound producing apparatus 204, the driving module 301 to drive the sound producing apparatus 204 to produce a sound. The integrated chip 100 controls, via a software program for the in-vehicle device, the driving module 301 to drive the in-vehicle device 205 to execute a corresponding operation. That is to say, the control unit for controlling the in-vehicle device in the original BCM on the vehicle may be integrated into the integrated chip, the control unit has a logic control software program, and the integrated chip may use the software program to control the driving module to drive the in-vehicle device to perform a corresponding operation.

For example, when the control unit is implemented using a hardware circuit, the integrated chip 100 controls, via a hardware circuit for the wireless communication transceiver 201, the wireless communication transceiver 201 to implement wireless communication. The integrated chip 100 controls, via a hardware circuit for the gateway transceiver 202, the gateway transceiver 202 to implement wired exchange of vehicle data. The integrated chip 100 controls, via a hardware circuit for the display apparatus 203, the driving module 301 to drive the display apparatus 203 to implement information displaying. The integrated chip 100 controls, via a hardware circuit for the sound producing apparatus 204, the driving module 301 to drive the sound producing apparatus 204 to produce a sound. The integrated chip 100 controls, via a hardware circuit for the in-vehicle device 205, the driving module 301 to drive the in-vehicle device 205 to execute a corresponding operation.

Further, to increase the integration level of the vehicle and reduce the number of connection lines, the integrated chip 100 and the driving module 301 may be integrated in a control circuit board.

The integrated chip 100, the driving module 301, the wireless communication transceiver 201 and the gateway transceiver 202 may also be integrated in a control circuit board.

It should be noted that the driving module 301 may include a plurality of driving units. For example, the driving module may include a display driving unit, a sounding driving unit, and an in-vehicle device driving unit.

The integrated chip 100 drives, via the display driving unit, the display apparatus 203 to implement information displaying. Similarly, the integrated chip 100 drives, via the sounding driving unit, the sound producing apparatus 204 to produce a sound. The integrated chip 100 drives the in-vehicle device 205 via the in-vehicle device driving unit.

As shown in FIG. 6a, the vehicle 200 further includes a thermal management apparatus 206, a control unit 307 for the thermal management apparatus being integrated in the integrated chip.

The integrated chip 100 may be connected to the thermal management apparatus 206 via the driving module 301, and is configured to control the driving module 301 to drive the thermal management apparatus 206, thereby implementing control over the thermal management apparatus 206.

Further, the vehicle 200 may further include an air conditioner 207, a control unit for the air conditioner being integrated in the integrated chip 100.

The integrated chip 100 is connected to the air conditioner 207 via the driving module 301, and is configured to control the driving module 301 to drive the air conditioner 207.

Further, a parking radar 209 may further be provided on the vehicle 200, and the vehicle control system 300 further includes a parking radar sending unit and a parking radar receiving unit.

A control unit for the parking radar 209 is integrated in the integrated chip 100.

The integrated chip 100 is connected to the parking radar sending unit, and is configured to control the parking radar sending unit to send a parking radar start signal.

The integrated chip 100 is connected to the parking radar receiving unit, and is configured to control the parking radar receiving unit to receive obstacle distance information, where the obstacle distance information is fed back from the parking radar.

The integrated chip 100 is further configured to control the sound producing apparatus 204 to sound an alarm tone or not according to the obstacle distance information.

To increase the integration level of the vehicle and reduce the number of connection lines, the integrated chip 100, the parking radar sending unit and the parking radar receiving unit may be integrated in a control circuit board.

As shown in FIG. 6a, the vehicle 200 may further include a smart key 210, and the control unit for the wireless communication transceiver may include a control unit for the smart key.

The integrated chip 100 is wirelessly connected to the smart key 210, is configured to control the wireless communication transceiver 201 to receive a control instruction for the smart key 210 and control the vehicle according to the control instruction, and is further configured to control the wireless communication transceiver 201 to send a low-frequency signal to the smart key 210.

Further, the vehicle 200 may further include a tire pressure monitor 211, and the control unit for the wireless communication transceiver includes a pressure monitoring unit.

The integrated chip 100 is wirelessly connected to the tire pressure monitor 211, and is configured to control the wireless communication transceiver 201 to receive tire pressure information fed back from the tire pressure monitor 211 and monitor the tire pressure information.

In an implementation scenario of the smart key 210, the wireless communication transceiver 201 may include a high-frequency receiver and a low-frequency transceiver; and the control unit for the smart key includes a high-frequency signal receiving control unit and a low-frequency signal sending and receiving control unit.

The integrated chip 100 is connected to the low-frequency transceiver, and is configured to control the low-frequency transceiver to perform low-frequency signal communication with the smart key 210.

The integrated chip 100 is connected to the high-frequency receiver, and is configured to control the high-frequency receiver to receive a high-frequency signal.

The integrated chip 100 is configured to control the vehicle 200 according to a high-frequency signal sent from the smart key 210.

In another implementation scenario of the smart key 210, the wireless communication transceiver 201 includes: a Bluetooth module, and the control unit for the smart key may include a control unit for the Bluetooth module.

The integrated chip 100 is connected to the Bluetooth module, and is configured to control the Bluetooth module to establish a connection to the smart key 210, and perform Bluetooth communication with the smart key 210 via the Bluetooth module.

In an implementation scenario of the tire pressure monitor 211, the wireless communication transceiver 201 may include a high-frequency receiver 2010.

The integrated chip 100 is connected to the high-frequency receiver 2010, and is configured to control the high-frequency receiver 2010 to receive a high-frequency signal sent by the tire pressure monitor 211 of the vehicle.

The integrated chip 100 is configured to obtain tire pressure information according to the high-frequency signal, and control the display apparatus 203 to display the tire pressure information.

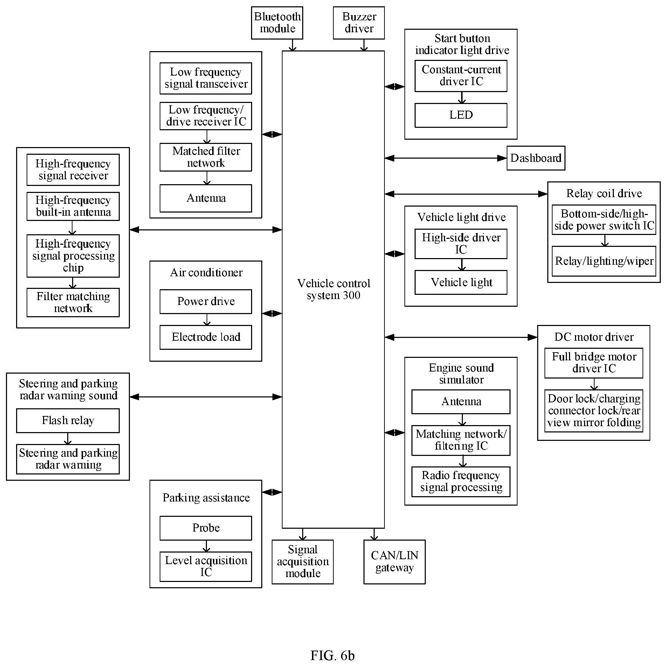

FIG. 6b is a schematic structural diagram of a vehicle control system according to one or more embodiments of the present disclosure. As shown in FIG. 6b, the high-frequency signal receiving control unit may include a high-frequency built-in antenna, a high-frequency signal processing chip, and a filter matching network. The filter matching network may include an input filter matching network and an output filter matching network. After the high-frequency built-in antenna receives a high-frequency signal, the high-frequency signal passes through the input filter matching network, is then filtered by a low-loss filter chip to reduce signal interference, and finally enters the high-frequency signal processing chip through the output filter matching network. The high-frequency signal processing chip processes the filtered high-frequency signal and sends the processed signal to the integrated chip. The low-frequency signal sending and receiving control unit may include a low-frequency drive chip, a filter matching network, and a low-frequency antenna. Different from the high-frequency built-in antenna, the low-frequency antenna may include: an exterior front right antenna, an exterior front left antenna, an interior rear antenna, an interior middle antenna, an exterior trunk antenna, a multi-function key detection antenna, and the like. The integrated chip may generate a low-frequency signal according to a control instruction. The low-frequency signal is filtered by the filter matching network. The low-frequency drive chip can drive the low-frequency antenna to transmit the low-frequency signal filtered by the filter matching network. The low-frequency drive chip may provide a reference clock through an external crystal oscillator.

The sound producing device 204 may include a speaker and a driver chip corresponding to the speaker. For example, a mono Class-D audio power amplifier chip may be selected as the driver chip of the speaker, and a low-pass filter (e.g., a magnetic bead filter) may be added at the output end of the driver chip to filter out clutter to reduce noise in the sound emitted by the speaker.

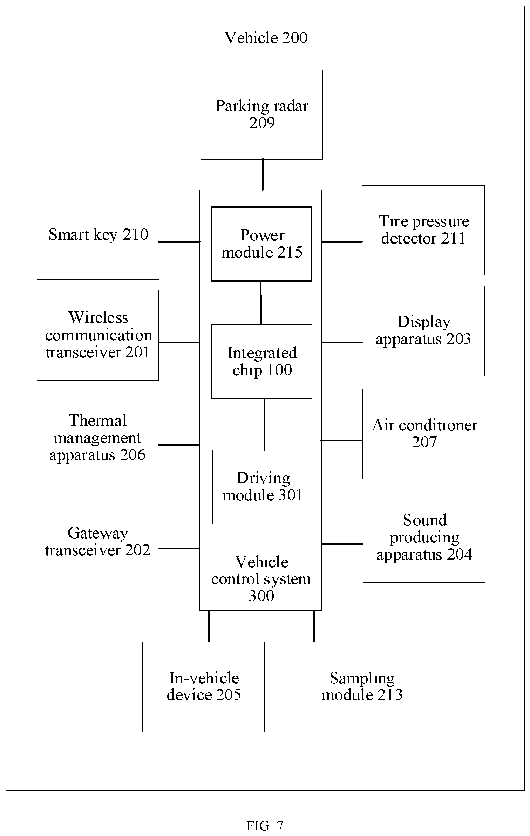

FIG. 7 is a schematic structural diagram of a vehicle control system according to one or more embodiments of the present disclosure. As shown in FIG. 7, the vehicle control system further includes a power module 215 configured to supply power to the vehicle control system 300, and a control unit for the power module is integrated in the integrated chip 100.

The integrated chip 100 is connected to the power module 215, and is configured to control the power module 215.

To increase the integration level of the vehicle and reduce the number of connection lines, the integrated chip 100 and the power module 215 may be integrated in a control circuit board.

The integrated chip 100, the driving module 301, the wireless communication transceiver 201, the gateway transceiver 202 and the power module 215 may also be integrated in a control circuit board.

The control circuit board may be, for example, a printed circuit board (PCB).

The functions implemented by the vehicle control system in the foregoing embodiments have been described in detail in the foregoing integrated chip embodiments, and will not be repeated here.

Based on the above, the vehicle control system 300 provided by the present disclosure can integrate a plurality of control units to implement control over a plurality of vehicle-mounted devices, thereby reducing the number of connection lines in the vehicle. Because the number of connection lines in the vehicle is reduced, space inside the vehicle is saved, and failures caused by connection line errors, poor contact, etc. can be reduced, thereby reducing the failure rate, electromagnetic interference and manufacturing costs. In addition, more control functions can be expanded to improve the controllability of the vehicle and enrich the control scenarios for the vehicle, thereby improving user experience.

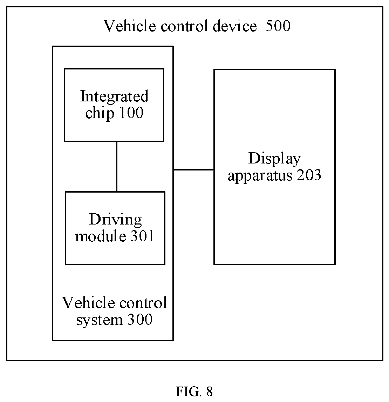

FIG. 8 is a schematic structural diagram of a vehicle control device according to one or more embodiments of the present disclosure. As shown in FIG. 8, the device 500 includes a vehicle control system 300 shown in FIG. 6 or FIG. 7, and a display apparatus 203 connected to the vehicle control system 300.

The display apparatus 203 may be a dashboard.

For example, in the vehicle control device, the vehicle control system 300 is connected to the display apparatus 203. The display apparatus 203 may be a dashboard on the vehicle, or may be a center control display screen of the vehicle. The display apparatus can receive various information sent by the vehicle control system and display the information on the dashboard. It should be noted that the display apparatus 203 and the vehicle control system 300 may not be arranged on the same PCB, and the display apparatus 203 and the vehicle control system 300 may be connected by a preset connection method. For example, the vehicle control system 300 and the display apparatus 203 may be respectively arranged on two PCBs, and the two PCBs may be connected by a flexible printed circuit board (FPC) cable.

The functions implemented by the vehicle control device in the foregoing embodiments have been described in detail in the foregoing integrated chip embodiments, and will not be repeated here.

Based on the above, the vehicle control device provided by the present disclosure can integrate a plurality of control units to implement control over a plurality of vehicle-mounted devices, thereby reducing the number of connection lines in the vehicle. Because the number of connection lines in the vehicle is reduced, space inside the vehicle is saved, and failures caused by connection line errors, poor contact, etc. can be reduced, thereby reducing the failure rate, electromagnetic interference and manufacturing costs. In addition, more control functions can be expanded to improve the controllability of the vehicle and enrich the control scenarios for the vehicle, thereby improving user experience.

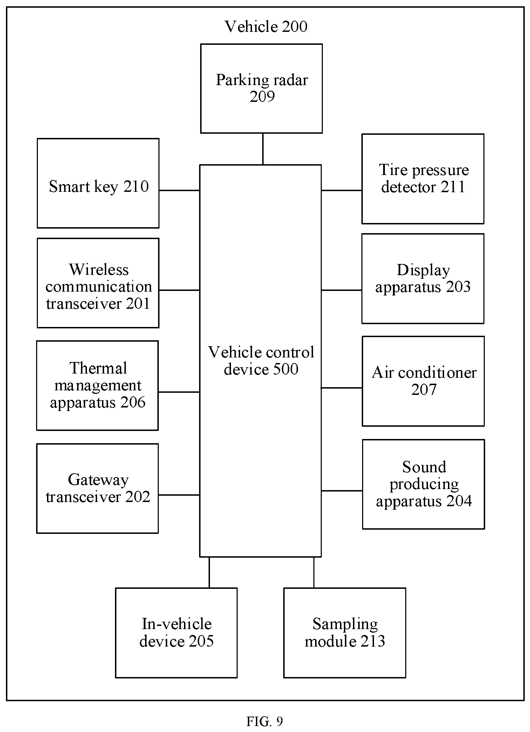

FIG. 9 is a schematic structural diagram of a vehicle according to one or more embodiments of the present disclosure. As shown in FIG. 9, the vehicle 200 includes a dashboard, a sound producing apparatus 204, an in-vehicle device 205 and a vehicle control device 500 shown in FIG. 8.

The vehicle control device 500 may be mounted on the dashboard, and the vehicle control device 500 is connected to the sound producing apparatus 204 and the in-vehicle device 205.

The display apparatus 203 of the vehicle control device faces a cab of the vehicle.

As shown in FIG. 9, the vehicle further includes a thermal management apparatus 206, an air conditioner 207, a parking radar 209, a smart key 210 and a tire pressure monitor 211.

The vehicle control device 500 is connected to the thermal management apparatus 206, the air conditioner 207 and the parking radar 209, and is wirelessly connected to the smart key 210 and the tire pressure monitor 211.

The functions implemented by the vehicle in the foregoing embodiments have been described in detail in the foregoing integrated chip embodiments, and will not be repeated here.

Based on the above, the vehicle provided by the present disclosure can integrate a plurality of control units into the vehicle control device to implement control over a plurality of vehicle-mounted devices, thereby reducing the number of connection lines in the vehicle. Because the number of connection lines in the vehicle is reduced, space inside the vehicle is saved, and failures caused by connection line errors, poor contact, etc. can be reduced, thereby reducing the failure rate, electromagnetic interference and manufacturing costs. In addition, more control functions can be expanded to improve the controllability of the vehicle and enrich the control scenarios for the vehicle, thereby improving user experience.

The preferred implementations of the present disclosure are described in detail above with reference to the accompanying drawings, but the present disclosure is not limited to the specific details in the above implementations. Other implementation solutions of the present disclosure that a person skilled in the art can easily figure out after considering the specification and practicing the present disclosure shall all fall within the protection scope of the present disclosure.

It should be further noted that the specific technical features described in the above specific embodiments may be combined in any suitable manner without contradiction. In addition, the various implementations of the present disclosure may be combined without departing from the idea of the present disclosure, and such combinations shall also fall within the scope of the present disclosure. The present disclosure is not limited to the precise structures described above. The scope of the present disclosure is limited only by the appended claims.

## Claims

1. An integrated chip (100), applicable to a vehicle (200) that comprises a wireless communication transceiver (201), a gateway transceiver (202), a display apparatus (203), a sound producing apparatus (204) and an in-vehicle device (205); **characterized in that**
the integrated chip (100) having an integrated control interface for the wireless communication transceiver, an integrated control interface for the gateway transceiver, an integrated control interface for the display apparatus, an integrated control interface for the sound producing apparatus and an integrated control interface for controlling the in-vehicle device;
the integrated chip is connectable to the wireless communication transceiver (201) via the control interface for the wireless communication transceiver, and is configured to control the wireless communication transceiver to implement wireless communication;
the integrated chip is connectable to the gateway transceiver (202) via the control interface for the gateway transceiver, and is configured to control the gateway transceiver to implement wired exchange of vehicle data;
the integrated chip is connectable to the display apparatus (203) via the control interface for the display apparatus, and is configured to control the display apparatus to implement information displaying;
the integrated chip is connectable to the sound producing apparatus (204) via the control interface for the sound producing apparatus, and is configured to control the sound producing apparatus to produce a sound; and
the integrated chip is connectable to the in-vehicle device (205) via the control interface for controlling the in-vehicle device, and is configured to implement control over the in-vehicle device.

2. The integrated chip according to claim 1, wherein the vehicle further comprises a thermal management apparatus (206), an air conditioner (207), and a driver, and the integrated chip further comprises a driving interface; and
the integrated chip is connectable to the driver via the driving interface, and the driver is configured to drive at least one of the thermal management apparatus (206), the air conditioner (207), the wireless communication transceiver (201), the gateway transceiver (202), the display apparatus (203), the sound producing apparatus (204) or the in-vehicle device (205);
or
wherein the vehicle further comprises a parking radar (209), and the integrated chip further comprises a radar information sending and receiving interface; and
the integrated chip is connectable to the parking radar (209) via the radar information sending and receiving interface, and is configured to send a parking radar start signal and receive obstacle distance information, wherein the obstacle distance information is fed back from the parking radar; and
the integrated chip is configured to control the sound producing apparatus (204) to sound an alarm tone or not according to the obstacle distance information.

3. The integrated chip according to claim 1 or claim 2, wherein the vehicle further comprises a sampling module (203), and the integrated chip further comprises a sampling interface; and
the integrated chip is connectable to the sampling module (203) via the sampling interface, and is configured to obtain information acquired by the sampling module.

4. A vehicle control system (300), applicable to a vehicle (200) that comprises a wireless communication transceiver (201), a gateway transceiver (202), a display apparatus (203), a sound producing apparatus (204) and an in-vehicle device (205); **characterized in that**
the vehicle control system comprises an integrated chip (100) according to claim 1 and a driving module (301) connected to the integrated chip; wherein a control unit for the wireless communication transceiver, a control unit for the gateway transceiver, a control unit for the display apparatus, a control unit for the sound producing apparatus and a control unit for the in-vehicle device are integrated in the integrated chip (100);
the integrated chip is connectable to the wireless communication transceiver (201), and is configured to control the wireless communication transceiver to implement wireless communication;
the integrated chip is connectable to the gateway transceiver (202), and is configured to control the gateway transceiver to implement wired exchange of vehicle data;
the integrated chip is connectable to the display apparatus (203) via the driving module, and is configured to control the driving module to drive the display apparatus to implement information displaying;
the integrated chip is connectable to the sound producing apparatus (204) via the driving module, and is configured to control the driving module to drive the sound producing apparatus to produce a sound; and
the integrated chip is connectable to the in-vehicle device (205) via the driving module, and is configured to control the driving module to drive the in-vehicle device to execute a corresponding operation.

5. The system according to claim 4,
wherein the control unit is implemented by a hardware circuit;
the integrated chip is configured to control, via a hardware circuit for the wireless communication transceiver, the wireless communication transceiver to implement wireless communication;
the integrated chip is configured to control, via a hardware circuit for the gateway transceiver, the gateway transceiver to implement wired exchange of vehicle data;
the integrated chip is configured to control, via a hardware circuit for the display apparatus, the driving module to drive the display apparatus to implement information displaying;
the integrated chip is configured to control, via a hardware circuit for the sound producing apparatus, the driving module to drive the sound producing apparatus to produce a sound; and
the integrated chip is configured to control, via a hardware circuit for the in-vehicle device, the driving module to drive the in-vehicle device to execute a corresponding operation.

6. The system according to claim 4, wherein the integrated chip (100) and the driving module (301) are integrated in a control circuit board, or
the integrated chip (100), the driving module (301), the wireless communication transceiver (201) and the gateway transceiver (202) are integrated in a control circuit board, or
wherein the integrated chip (100), the driving module (301), the wireless communication transceiver (201), the gateway transceiver (202 and the power module are integrated in a control circuit board.

7. The system according to claim 4, wherein the driving module comprises a plurality of driving units;
the integrated chip is configured to drive, via at least one of the plurality of driving units, the display apparatus to implement information displaying;
the integrated chip is configured to drive, via at least one of the plurality of driving units, the sound producing apparatus to produce a sound; and
the integrated chip is configured to drive the in-vehicle device via at least one of the plurality of driving units.

8. The system according to any one of claims 4-7, wherein the in-vehicle device comprises at least one of a vehicle light, a start button indicator, a relay coil, a vehicle door lock, a window lifter, a seat adjuster or a wiper motor.

9. The system according to any one of claims 4-8, wherein the vehicle further comprises a thermal management apparatus (206)), a control unit for the thermal management apparatus being integrated in the integrated chip; and
the integrated chip is connectable to the thermal management apparatus via the driving module, and is configured to control the driving module to drive the thermal management apparatus; or
wherein the vehicle further comprises an air conditioner (207), a control unit for the air conditioner being integrated in the integrated chip; and
the integrated chip is connectable to the air conditioner via the driving module, and is configured to control the driving module to drive the air conditioner; or
wherein the vehicle further comprises a parking radar (209); the system further comprises a parking radar sending unit and a parking radar receiving unit;
a control unit for the parking radar is integrated in the integrated chip;
the integrated chip is connectable to the parking radar sending unit, and is configured to control the parking radar sending unit to send a parking radar start signal;
the integrated chip is connectable to the parking radar receiving unit, and is configured to control the parking radar receiving unit to receive obstacle distance information, wherein the obstacle distance information is fed back from the parking radar; and
the integrated chip is further configured to control the sound producing apparatus to sound an alarm tone or not according to the obstacle distance information.

10. The system according to claim 9, wherein the integrated chip, the parking radar sending unit and the parking radar receiving unit are integrated in a control circuit board.

11. The system according to claim 4, wherein the vehicle comprises a smart key (210), the control unit for the wireless communication transceiver comprises a control unit for the smart key, and
the integrated chip is wirelessly connectable to the smart key, is configured to control the wireless communication transceiver to receive a control instruction for the smart key and control the vehicle according to the control instruction, and adjuster, is further configured to control the wireless communication transceiver to send a low-frequency signal to the smart key.

12. The system according to claim 4, wherein the vehicle comprises a tire pressure monitor (211), the control unit for the wireless communication transceiver comprises a pressure monitoring unit, and
the integrated chip is wirelessly connectable to the tire pressure monitor, and is configured to control the wireless communication transceiver to receive tire pressure information fed back from the tire pressure monitor and monitor the tire pressure information; and
wherein the wireless communication transceiver comprises a high-frequency receiver;
the integrated chip is connectable to the high-frequency receiver, and is configured to control the high-frequency receiver to receive a high-frequency signal sent by a tire pressure monitor of the vehicle; and
the integrated chip is configured to obtain tire pressure information according to the high-frequency signal, and control the display apparatus to display the tire pressure information.

13. The system according to claim 11, wherein the wireless communication transceiver (201) comprises a high-frequency receiver and a low-frequency transceiver; the control unit for the smart key comprises a high-frequency signal receiving control unit and a low-frequency signal sending and receiving control unit;
the integrated chip is connectable to the low-frequency transceiver, and is configured to control the low-frequency transceiver to perform low-frequency signal communication with the smart key;
the integrated chip is connectable to the high-frequency receiver, and is configured to control the high-frequency receiver to receive a high-frequency signal; and
the integrated chip is configured to control the vehicle according to a high-frequency signal sent from the smart key;
or
wherein the wireless communication transceiver comprises a Bluetooth module, and the control unit for the smart key comprises a control unit for the Bluetooth module; and
the integrated chip is connected to the Bluetooth module, and is configured to control the Bluetooth module to establish a connection to the smart key, and perform Bluetooth communication with the smart key via the Bluetooth module.

14. The system according to claim 4, further comprising a power module (215) configured to supply power to the vehicle control system, and a control unit for the power module is integrated in the integrated chip; and
the integrated chip is connected to the power module, and is configured to control the power module, and wherein the integrated chip and the power module are integrated in a control circuit board.

15. The system according to claim 4, wherein the system further comprises a sampling module (213); and
the integrated chip is connected to the sampling module, and is configured to obtain information acquired by the sampling module; and
wherein the information acquired by the sampling module comprises a vehicle speed signal; and
the integrated chip is configured to, when the vehicle speed signal acquired by the sampling module is greater than or equal to a preset speed threshold, control the sound producing apparatus to sound an engine simulation prompt tone.

16. The system according to claim 4, wherein the vehicle (100) further comprises a thermal management apparatus (206), an air conditioner (207) and a parking radar (209), and the vehicle control system further comprises a power module (215) configured to supply power to the vehicle control system;
the integrated chip further integrates a control unit for the thermal management apparatus, a control unit for the air conditioner, a control unit for the parking radar and a control unit for the power module;
the integrated chip is connectable to the thermal management apparatus via the driving module, and is configured to control the driving module to drive the thermal management apparatus;
the integrated chip is connectable to the air conditioner via the driving module, and is configured to control the driving module to drive the air conditioner;
the integrated chip is connectable to the parking radar sending unit, and is configured to control the parking radar sending unit to send a parking radar start signal; the integrated chip is connected to the parking radar receiving unit, and is configured to control the parking radar receiving unit to receive obstacle distance information, wherein the obstacle distance information is fed back from the parking radar; the integrated chip is further configured to control the sound producing apparatus to sound an alarm tone or not according to the obstacle distance information; and
the integrated chip is connected to the power module, and is configured to control the power module.

17. The system according to claim 16, wherein the integrated chip, the driving module, the wireless communication transceiver and the gateway transceiver are integrated in a control circuit board, and the control circuit board further integrates a parking radar sending unit, a parking radar receiving module, a sampling module and a power module.

18. A vehicle (200), comprising a dashboard, a sound producing apparatus, an in-vehicle device and a vehicle control device (500) comprising a vehicle control system (300) according to any one of claims 4-17, wherein
the vehicle control device is mounted on the dashboard, and the vehicle control device is connected to the sound producing apparatus and the in-vehicle device, and
the vehicle further comprises a thermal management apparatus, an air conditioner, a parking radar, a smart key and a tire pressure monitor; and
the vehicle control device is connected to the thermal management apparatus, the air conditioner and the parking radar, and is wirelessly connected to the smart key and the tire pressure monitor.

## Patentansprüche

1. Integrierter Chip (100), der in einem Fahrzeug (200) verwendet werden kann, das einen drahtlosen Kommunikations-Sendeempfänger bzw. -Transceiver (201), einen Gateway-Sendeempfänger bzw. -Transceiver (202), eine Anzeigevorrichtung (203), eine Tonerzeugungsvorrichtung (204) und eine fahrzeuginterne Einrichtung (205) umfasst; **dadurch gekennzeichnet, dass**
der integrierte Chip (100) eine integrierte Steuerschnittstelle für den drahtlosen Kommunikations-Transceiver, eine integrierte Steuerschnittstelle für den Gateway-Transceiver, eine integrierte Steuerschnittstelle für die Anzeigevorrichtung, eine integrierte Steuerschnittstelle für die Tonerzeugungsvorrichtung und eine integrierte Steuerschnittstelle zum Steuern der fahrzeuginternen Einrichtung aufweist;
der integrierte Chip über die Steuerschnittstelle für den drahtlosen Kommunikations-Sendeempfänger mit dem drahtlosen Kommunikations-Sendeempfänger (201) verbindbar ist und dazu konfiguriert ist, den drahtlosen Kommunikations-Sendeempfänger zu steuern, um drahtlose Kommunikation zu implementieren;
der integrierte Chip über die Steuerschnittstelle für den Gateway-Sendeempfänger mit dem Gateway-Sendeempfänger (202) verbindbar ist und dazu konfiguriert ist, den Gateway-Sendeempfänger zu steuern, um einen drahtgebundenen Austausch von Fahrzeugdaten zu implementieren;
der integrierte Chip über die Steuerschnittstelle für die Anzeigevorrichtung mit der Anzeigevorrichtung (203) verbindbar ist und dazu konfiguriert ist, die Anzeigevorrichtung zu steuern, um eine Informationsanzeige zu implementieren;
der integrierte Chip über die Steuerschnittstelle für die Tonerzeugungsvorrichtung mit der Tonerzeugungsvorrichtung (204) verbindbar ist und dazu konfiguriert ist, die Tonerzeugungsvorrichtung zu steuern, um einen Ton zu erzeugen; und
der integrierte Chip über die Steuerschnittstelle zum Steuern der fahrzeuginternen Einrichtung mit der fahrzeuginternen Einrichtung (205) verbindbar ist und dazu konfiguriert ist, eine Steuerung über die fahrzeuginterne Einrichtung zu implementieren.

2. Integrierter Chip gemäß Anspruch 1, wobei das Fahrzeug ferner eine Wärmemanagementvorrichtung (206), eine Klimaanlage (207) und einen Fahrer umfasst und der integrierte Chip ferner eine Fahrerschnittstelle umfasst; und
der integrierte Chip über die Fahrerschnittstelle mit dem Fahrer verbindbar ist und der Fahrer dazu konfiguriert ist, mindestens eine der folgenden Vorrichtungen anzusteuern: die Wärmemanagementvorrichtung (206), die Klimaanlage (207), den drahtlosen Kommunikations-Sendeempfänger (201), die Gateway-Sendeempfangseinrichtung (202), die Anzeigeeinrichtung (203), die Tonerzeugungsvorrichtung (204) oder die fahrzeuginterne Einrichtung (205) anzusteuern;
oder
wobei das Fahrzeug ferner ein Parkradar (209) umfasst und der integrierte Chip ferner eine Radarinformations-Sende- und -Empfangsschnittstelle umfasst; und
der integrierte Chip über die Schnittstelle zum Senden und Empfangen von Radarinformationen mit dem Parkradar (209) verbindbar ist und dazu konfiguriert ist, ein Parkradar-Startsignal zu senden und Hindernisabstandsinformationen zu empfangen, wobei die Hindernisabstandsinformationen vom Parkradar zurückgemeldet werden; und
der integrierte Chip dazu konfiguriert ist, die Tonerzeugungsvorrichtung (204) so zu steuern, dass sie entsprechend den Hindernisabstandsinformationen einen Alarmton ausgibt oder nicht.

3. Integrierter Chip gemäß Anspruch 1 oder Anspruch 2, wobei das Fahrzeug ferner ein Abtastmodul (203) umfasst und der integrierte Chip ferner eine Abtastschnittstelle umfasst; und
der integrierte Chip über die Abtastschnittstelle mit dem Abtastmodul (203) verbindbar ist und dazu konfiguriert ist, vom Abtastmodul erfasste Informationen zu erhalten.

4. Fahrzeugsteuerungssystem (300), anwendbar auf ein Fahrzeug (200), das einen drahtlosen Kommunikationstransceiver (201), einen Gateway-Transceiver (202), eine Anzeigevorrichtung (203), eine Tonerzeugungsvorrichtung (204) und eine fahrzeuginterne Einrichtung (205) umfasst; **dadurch gekennzeichnet, dass**
das Fahrzeugsteuerungssystem einen integrierten Chip (100) gemäß Anspruch 1 und ein mit dem integrierten Chip verbundenes Fahrmodul (301) umfasst; wobei eine Steuereinheit für den drahtlosen Kommunikations-Sendeempfänger, eine Steuereinheit für den Gateway-Sendeempfänger, eine Steuereinheit für die Anzeigevorrichtung, eine Steuereinheit für die Tonerzeugungsvorrichtung und eine Steuereinheit für die fahrzeuginterne Ein- bzw. Vorrichtung in dem integrierten Chip (100) integriert sind;
der integrierte Chip mit dem drahtlosen Kommunikationstransceiver (201) verbindbar ist und dazu konfiguriert ist, den drahtlosen Kommunikationstransceiver zu steuern, um eine drahtlose Kommunikation durchzuführen;
der integrierte Chip mit dem Gateway-Transceiver (202) verbindbar ist und dazu konfiguriert ist, den Gateway-Transceiver zu steuern, um einen drahtgebundenen Austausch von Fahrzeugdaten durchzuführen;
der integrierte Chip über das Fahrmodul mit der Anzeigeeinrichtung (203) verbindbar ist und dazu konfiguriert ist, das Fahrmodul zu steuern, um die Anzeigeeinrichtung anzusteuern, um eine Informationsanzeige zu implementieren;
der integrierte Chip über das Fahrmodul mit der Tonerzeugungsvorrichtung (204) verbindbar ist und dazu konfiguriert ist, das Fahrmodul zu steuern, um die Tonerzeugungsvorrichtung anzusteuern, um einen Ton zu erzeugen; und
der integrierte Chip über das Fahrmodul mit der internen Fahrzeugvorrichtung (205) verbindbar ist und dazu konfiguriert ist, das Fahrmodul so zu steuern, dass es die interne Fahrzeugvorrichtung so ansteuert, dass sie einen entsprechenden Vorgang ausführt.

5. System gemäß Anspruch 4,
wobei die Steuereinheit durch eine Hardwareschaltung implementiert ist;
der integrierte Chip dazu konfiguriert ist, über eine Hardwareschaltung für den drahtlosen Kommunikationstransceiver den drahtlosen Kommunikationstransceiver zu steuern, um eine drahtlose Kommunikation durchzuführen;
der integrierte Chip dazu konfiguriert ist, über eine Hardwareschaltung für den Gateway-Transceiver den Gateway-Transceiver zu steuern, um einen drahtgebundenen Austausch von Fahrzeugdaten durchzuführen;
der integrierte Chip dazu konfiguriert ist, über eine Hardwareschaltung für die Anzeigevorrichtung das Ansteuerungsmodul zu steuern, um die Anzeigevorrichtung anzusteuern, um eine Informationsanzeige durchzuführen;
der integrierte Chip dazu konfiguriert ist, über eine Hardwareschaltung für die Tonerzeugungsvorrichtung das Steuermodul so zu steuern, dass es die Tonerzeugungsvorrichtung so ansteuert, dass sie einen Ton erzeugt; und
der integrierte Chip dazu konfiguriert ist, über eine Hardwareschaltung für die interne Fahrzeugvorrichtung das Steuermodul so zu steuern, dass es die interne Fahrzeugvorrichtung so ansteuert, dass sie einen entsprechenden Vorgang ausführt.

6. System gemäß Anspruch 4, wobei der integrierte Chip (100) und das Ansteuermodul (301) in einer Steuerschaltplatine integriert sind, oder
der integrierte Chip (100), das Ansteuermodul (301), der drahtlose Kommunikationstransceiver (201) und der Gateway-Transceiver (202) in einer Steuerplatine integriert sind, oder
wobei der integrierte Chip (100), das Ansteuermodul (301), der drahtlose Kommunikationstransceiver (201), der Gateway-Transceiver (202) und das Leistungsmodul in einer Steuerplatine integriert sind.

7. System gemäß Anspruch 4, wobei das Ansteuerungsmodul mehrere Ansteuereinheiten umfasst;
der integrierte Chip dazu konfiguriert ist, über mindestens eine der mehreren Ansteuereinheiten die Anzeigevorrichtung anzusteuern, um eine Informationsanzeige zu realisieren;
der integrierte Chip dazu konfiguriert ist, über mindestens eine der mehreren Ansteuereinheiten die Tonerzeugungsvorrichtung anzusteuern, um einen Ton zu erzeugen; und
der integrierte Chip dazu konfiguriert ist, die fahrzeuginterne Vorrichtung über mindestens eine der mehreren Antriebseinheiten anzusteuern.

8. System nach einem der Ansprüche 4 bis 7, wobei die fahrzeuginterne Vorrichtung mindestens eine Fahrzeugleuchte, eine Starttastenanzeige, eine Relaisspule, eine Fahrzeugtürverriegelung, einen Fensterheber, eine Sitzverstellung oder einen Scheibenwischermotor umfasst.

9. System nach einem der Ansprüche 4 bis 8, wobei das Fahrzeug ferner eine Wärmemanagementvorrichtung (206) umfasst, wobei eine Steuereinheit für die Wärmemanagementvorrichtung in dem integrierten Chip integriert ist; und
der integrierte Chip über das Steuermodul mit der Wärmemanagementvorrichtung verbindbar ist und dazu konfiguriert ist, das Steuermodul zu steuern, um die Wärmemanagementvorrichtung anzusteuern; oder
wobei das Fahrzeug ferner eine Klimaanlage (207) umfasst, wobei eine Steuereinheit für die Klimaanlage in dem integrierten Chip integriert ist; und
der integrierte Chip über das Steuermodul mit der Klimaanlage verbindbar ist und dazu konfiguriert ist, das Steuermodul zu steuern, um die Klimaanlage anzusteuern; oder
wobei das Fahrzeug ferner ein Parkradar (209) umfasst; das System ferner eine Parkradarsendeeinheit und eine Parkradarempfangseinheit umfasst;
eine Steuereinheit für das Parkradar in dem integrierten Chip integriert ist;
der integrierte Chip mit der Parkradar-Sendeeinheit verbindbar ist und dazu konfiguriert ist,
die Parkradar-Sendeeinheit zu steuern, um ein Parkradar-Startsignal zu senden;
der integrierte Chip mit der Parkradarempfangseinheit verbindbar ist und dazu konfiguriert ist, die Parkradarempfangseinheit zu steuern, um Hindernisabstandsinformationen zu empfangen, wobei die Hindernisabstandsinformationen vom Parkradar zurückgeführt werden; und
der integrierte Chip ferner dazu konfiguriert ist, die Tonerzeugungsvorrichtung zu steuern, um entsprechend den Hindernisabstandsinformationen einen Alarmton zu erzeugen oder nicht.

10. System gemäß Anspruch 9, wobei der integrierte Chip, die Parkradarsendeeinheit und die Parkradarempfangseinheit in einer Steuerplatine integriert sind.

11. System gemäß Anspruch 4, wobei das Fahrzeug einen intelligenten Schlüssel (210) umfasst, die Steuereinheit für den drahtlosen Kommunikationssender eine Steuereinheit für den intelligenten Schlüssel umfasst und
der integrierte Chip drahtlos mit dem intelligenten Schlüssel verbindbar ist, dazu konfiguriert ist, den drahtlosen Kommunikationssender-Empfänger so zu steuern, dass er eine Steueranweisung für den intelligenten Schlüssel empfängt und das Fahrzeug gemäß der Steueranweisung steuert, und der Einsteller ferner dazu konfiguriert ist, den drahtlosen Kommunikationssender-Empfänger so zu steuern, dass er ein Niederfrequenzsignal an den intelligenten Schlüssel sendet.

12. System gemäß Anspruch 4, wobei das Fahrzeug einen Reifendruckwächter (211) umfasst, die Steuereinheit für den drahtlosen Kommunikations-Transceiver eine Drucküberwachungseinheit umfasst, und
der integrierte Chip drahtlos mit dem Reifendruckwächter verbunden werden kann und dazu konfiguriert ist, den drahtlosen Kommunikationssender so zu steuern, dass er vom Reifendruckwächter zurückgemeldete Reifendruckinformationen empfängt und die Reifendruckinformationen überwacht; und
wobei der drahtlose Kommunikationssender einen Hochfrequenzempfänger umfasst;
der integrierte Chip mit dem Hochfrequenzempfänger verbindbar ist und dazu konfiguriert ist, den Hochfrequenzempfänger so zu steuern, dass er ein von einem Reifendruckwächter des Fahrzeugs gesendetes Hochfrequenzsignal empfängt; und
der integrierte Chip dazu konfiguriert ist, anhand des Hochfrequenzsignals Reifendruckinformationen zu erhalten und die Anzeigevorrichtung so zu steuern, dass sie die Reifendruckinformationen anzeigt.

13. Das System gemäß Anspruch 11, wobei der drahtlose Kommunikationssender/-empfänger (201) einen Hochfrequenzempfänger und einen Niederfrequenzsender/-empfänger umfasst; die Steuereinheit für den intelligenten Schlüssel eine Hochfrequenzsignal-Empfangssteuereinheit und eine Niederfrequenzsignal-Sende- und -Empfangssteuereinheit umfasst;
der integrierte Chip mit dem Niederfrequenz-Sendeempfänger verbindbar ist und dazu konfiguriert ist, den Niederfrequenz-Sendeempfänger zu steuern, um eine Niederfrequenz-Signalkommunikation mit dem intelligenten Schlüssel durchzuführen;
der integrierte Chip mit dem Hochfrequenzempfänger verbindbar ist und dazu konfiguriert ist, den Hochfrequenzempfänger zu steuern, um ein Hochfrequenzsignal zu empfangen; und
der integrierte Chip dazu konfiguriert ist, das Fahrzeug gemäß einem vom intelligenten Schlüssel gesendeten Hochfrequenzsignal zu steuern;
oder
wobei der drahtlose Kommunikationstransceiver ein Bluetooth-Modul umfasst und die Steuereinheit für den intelligenten Schlüssel eine Steuereinheit für das Bluetooth-Modul umfasst; und
der integrierte Chip mit dem Bluetooth-Modul verbunden ist und dazu konfiguriert ist, das Bluetooth-Modul so zu steuern, dass es eine Verbindung zu dem intelligenten Schlüssel herstellt und über das Bluetooth-Modul eine Bluetooth-Kommunikation mit dem intelligenten Schlüssel durchführt.

14. System gemäß Anspruch 4, ferner mit einem Leistungsmodul (215), das dazu konfiguriert ist, das Fahrzeugsteuerungssystem mit Leistung zu versorgen, und einer Steuereinheit für das Leistungsmodul, die in dem integrierten Chip integriert ist; und
wobei der integrierte Chip mit dem Leistungsmodul verbunden ist und dazu konfiguriert ist, das Leistungsmodul zu steuern, und
wobei der integrierte Chip und das Leistungsmodul in einer Steuerplatine integriert sind.

15. System gemäß Anspruch 4, wobei das System ferner ein Abtastmodul (213) umfasst; und
der integrierte Chip mit dem Abtastmodul verbunden ist und dazu konfiguriert ist, vom Abtastmodul erfasste Informationen zu erhalten; und
wobei die vom Abtastmodul erfassten Informationen ein Fahrzeuggeschwindigkeitssignal umfassen; und
der integrierte Chip dazu konfiguriert ist, wenn das vom Abtastmodul erfasste Fahrzeuggeschwindigkeitssignal größer oder gleich einem voreingestellten Geschwindigkeitsschwellenwert ist, die Tonerzeugungsvorrichtung so zu steuern, dass sie einen Motor-Simulations-Signalton ausgibt.

16. System gemäß Anspruch 4, wobei das Fahrzeug (100) ferner eine Wärmemanagementvorrichtung (206), eine Klimaanlage (207) und ein Parkradar (209) umfasst und das Fahrzeugsteuerungssystem ferner ein Leistungsmodul (215) umfasst, das dazu konfiguriert ist, das Fahrzeugsteuerungssystem mit Leistung zu versorgen;
der integrierte Chip ferner eine Steuereinheit für die Wärmemanagementvorrichtung, eine Steuereinheit für die Klimaanlage, eine Steuereinheit für das Parkradar und eine Steuereinheit für das Leistungsmodul integriert;
der integrierte Chip über das Treibermodul mit der Wärmemanagementvorrichtung verbindbar ist und dazu konfiguriert ist, das Treibermodul zu steuern, um die Wärmemanagementvorrichtung anzusteuern;
der integrierte Chip über das Steuermodul mit der Klimaanlage verbindbar ist und dazu konfiguriert ist, das Steuermodul zu steuern, um die Klimaanlage anzusteuern;
der integrierte Chip mit der Parkradarsendeeinheit verbindbar ist und dazu konfiguriert ist, die Parkradarsendeeinheit zu steuern, um ein Parkradarsignal zu senden; der integrierte Chip mit der Parkradarempfangseinheit verbunden ist und dazu konfiguriert ist, die Parkradarempfangseinheit zu steuern, um Hindernisabstandsinformationen zu empfangen, wobei die Hindernisabstandsinformationen vom Parkradar zurückgeführt werden; der integrierte Chip ferner dazu konfiguriert ist, die Tonerzeugungsvorrichtung zu steuern, um entsprechend den Hindernisabstandsinformationen einen Alarmton auszugeben oder nicht; und
der integrierte Chip mit dem Leistungsmodul verbunden ist und dazu konfiguriert ist, das Leistungsmodul zu steuern.

17. System gemäß Anspruch 16, wobei der integrierte Chip, das Treibermodul, der drahtlose Kommunikationstransceiver und der Gateway-Transceiver in einer Steuerschaltungskarte integriert sind und die Steuerschaltungskarte ferner eine Parkradarsendeeinheit, ein Parkradarempfangsmodul, ein Abtastmodul und ein Leistungsmodul integriert.

18. Fahrzeug (200) mit einem Armaturenbrett, einer Tonerzeugungsvorrichtung, einer fahrzeugseitigen bzw. -internen Vorrichtung und einer Fahrzeugsteuerungsvorrichtung (500) mit einem Fahrzeugsteuerungssystem (300) gemäß einem der Ansprüche 4 bis 17, wobei
die Fahrzeugsteuerungsvorrichtung an dem Armaturenbrett angebracht ist, und die Fahrzeugsteuerungsvorrichtung mit der Tonerzeugungsvorrichtung und der fahrzeugseitigen Vorrichtung verbunden ist, und
das Fahrzeug ferner eine Wärmemanagementvorrichtung, eine Klimaanlage, ein Parkradar, einen intelligenten Schlüssel und einen Reifendruckwächter umfasst; und
die Fahrzeugsteuerungseinrichtung mit der Wärmemanagementvorrichtung, der Klimaanlage und dem Parkradar verbunden ist und drahtlos mit dem intelligenten Schlüssel und dem Reifendruckwächter verbunden ist.

## Revendications

1. Puce intégrée (100), applicable à un véhicule (200) qui comprend un émetteur-récepteur de communication sans fil (201), un émetteur-récepteur de passerelle (202), un appareil d'affichage (203), un appareil de production de son (204) et un dispositif embarqué (205) ; **caractérisée en ce que**
la puce intégrée (100) possède une interface de commande intégrée pour l'émetteur-récepteur de communication sans fil, une interface de commande intégrée pour l'émetteur-récepteur de passerelle, une interface de commande intégrée pour l'appareil d'affichage, une interface de commande intégrée pour l'appareil de production de son et une interface de commande intégrée pour commander le dispositif embarqué ;
la puce intégrée est connectable à l'émetteur-récepteur de communication sans fil (201) via l'interface de commande pour l'émetteur-récepteur de communication sans fil, et est configurée pour commander l'émetteur-récepteur de communication sans fil afin d'implémenter la communication sans fil ;
la puce intégrée peut être connectée à l'émetteur-récepteur de la passerelle (202) via l'interface de commande de l'émetteur-récepteur de la passerelle, et est configurée pour commander l'émetteur-récepteur de la passerelle afin d'implémenter l'échange câblé des données du véhicule ;
la puce intégrée est connectable à l'appareil d'affichage (203) via l'interface de commande de l'appareil d'affichage, et est configurée pour commander l'appareil d'affichage afin d'implémenter l'affichage d'informations ;
la puce intégrée peut être connectée à l'appareil de production de son (204) via l'interface de commande de l'appareil de production de son, et est configurée pour commander l'appareil de production de son afin de produire un son ; et
la puce intégrée est connectable au dispositif embarqué (205) via l'interface de commande pour commander le dispositif embarqué, et est configurée pour implémenter une commande sur le dispositif embarqué.

2. Puce intégrée selon la revendication 1, dans laquelle le véhicule comprend en outre un appareil de gestion thermique (206), un climatiseur (207) et un conducteur, et la puce intégrée comprend en outre une interface de conduite ; et
la puce intégrée peut être connectée au conducteur via l'interface de pilotage, et le conducteur est configuré pour piloter au moins l'un des appareils de gestion thermique (206), le climatiseur (207), l'émetteur-récepteur de communication sans fil (201), l'émetteur-récepteur de passerelle (202), l'appareil d'affichage (203), l'appareil de production de son (204) ou le dispositif embarqué (205) ;
ou
dans lequel le véhicule comprend en outre un radar de stationnement (209), et la puce intégrée comprend en outre une interface d'envoi et de réception d'informations radar ; et
la puce intégrée peut être connectée au radar de stationnement (209) via l'interface d'envoi et de réception d'informations radar, et est configurée pour envoyer un signal de démarrage du radar de stationnement et recevoir des informations sur la distance de l'obstacle, dans lequel les informations sur la distance de l'obstacle sont renvoyées par le radar de stationnement ; et
la puce intégrée est configurée pour commander l'appareil de production de son (204) afin qu'il émette ou non une tonalité d'alarme selon les informations relatives à la distance de l'obstacle.

3. Puce intégrée selon la revendication 1 ou la revendication 2, dans laquelle le véhicule comprend en outre un module d'échantillonnage (203), et la puce intégrée comprend en outre une interface d'échantillonnage ; et.
la puce intégrée peut être connectée au module d'échantillonnage (203) via l'interface d'échantillonnage, et est configurée pour obtenir des informations acquises par le module d'échantillonnage.

4. Système de commande de véhicule (300), applicable à un véhicule (200) qui comprend un émetteur-récepteur de communication sans fil (201), un émetteur-récepteur de passerelle (202), un appareil d'affichage (203), un appareil de production de son (204) et un dispositif embarqué (205) ; **caractérisé en ce que**
le système de commande du véhicule comprend une puce intégrée (100) selon la revendication 1 et un module de conduite (301) connecté à la puce intégrée ; dans lequel une unité de commande pour l'émetteur-récepteur de communication sans fil, une unité de commande pour l'émetteur-récepteur de passerelle, une unité de commande pour l'appareil d'affichage, une unité de commande pour l'appareil de production de son et une unité de commande pour le dispositif embarqué sont intégrées dans la puce intégrée (100) ;
la puce intégrée peut être connectée à l'émetteur-récepteur de communication sans fil (201), et est configurée pour commander l'émetteur-récepteur de communication sans fil afin d'implémenter la communication sans fil ;
la puce intégrée est connectable à l'émetteur-récepteur de la passerelle (202), et est configurée pour commander l'émetteur-récepteur de la passerelle afin d'implémenter l'échange câblé des données du véhicule ;
la puce intégrée est connectable à l'appareil d'affichage (203) via le module de conduite, et est configurée pour commander le module de conduite afin de piloter l'appareil d'affichage pour implémenter l'affichage d'informations ;
la puce intégrée est connectable à l'appareil de production de son (204) via le module de conduite , et est configurée pour commander le module de conduite afin de piloter l'appareil de production de son pour produire un son ; et
la puce intégrée est connectable au dispositif embarqué (205) via le module de conduite, et est configurée pour commander le module de conduite afin de conduire le dispositif embarqué pour exécuter une opération correspondante.

5. Le système selon la revendication 4,
dans lequel l'unité de commande est implémentée par un circuit matériel ;
la puce intégrée est configurée pour commander, via un circuit matériel pour l'émetteur-récepteur de communication sans fil, l'émetteur-récepteur de communication sans fil pour implémenter une communication sans fil ;
la puce intégrée est configurée pour commander, via un circuit matériel pour l'émetteur-récepteur de passerelle, l'émetteur-récepteur de passerelle pour implémenter l'échange câblé de données de véhicule ;
la puce intégrée est configurée pour commander, via un circuit matériel pour l'appareil d'affichage, le module de pilotage pour piloter l'appareil d'affichage afin d'implémenter l'affichage d'informations ;
la puce intégrée est configurée pour commander, par l'intermédiaire d'un circuit matériel pour l'appareil de production de son, le module de commande pour commander l'appareil de production de son afin de produire un son ; et
la puce intégrée est configurée pour commander, via un circuit matériel pour le dispositif embarqué, le module de pilotage pour piloter le dispositif embarqué afin d'exécuter une opération correspondante.

6. Le système selon la revendication 4, dans lequel la puce intégrée (100) et le module de conduite (301) sont intégrés dans une carte de circuit de commande, ou.
la puce intégrée (100), le module de pilotage (301), l'émetteur-récepteur de communication sans fil (201) et l'émetteur-récepteur de passerelle (202) sont intégrés dans une carte de circuit de commande, ou
dans lequel la puce intégrée (100), le module de pilotage (301), l'émetteur-récepteur de communication sans fil (201), l'émetteur-récepteur de passerelle (202) et le module d'alimentation sont intégrés dans une carte de circuits de commande.

7. Le système selon la revendication 4, dans lequel le module de conduite comprend une pluralité d'unités de conduite ;
la puce intégrée est configurée pour piloter, via au moins une des unités de pilotage, l'appareil d'affichage afin d'implémenter l'affichage d'informations ;
la puce intégrée est configurée pour piloter, par l'intermédiaire d'au moins une des unités de pilotage, l'appareil de production de son afin de produire un son ; et
la puce intégrée est configurée pour piloter le dispositif embarqué via au moins une de la pluralité d'unités de pilotage.

8. Le système selon l'une des revendications 4 à 7, dans lequel le dispositif embarqué comprend au moins l'un des éléments suivants : un éclairage de véhicule, un indicateur de bouton de démarrage, une bobine de relais, une serrure de porte de véhicule, un lève-vitre, un ajusteur de siège ou un moteur d'essuie-glace.

9. Le système selon l'une des revendications 4 à 8, dans lequel le véhicule comprend en outre un appareil de gestion thermique (206)), une unité de commande de l'appareil de gestion thermique étant intégrée dans la puce intégrée ; et.
la puce intégrée peut être connectée à l'appareil de gestion thermique via le module de conduite, et est configurée pour commander le module de conduite afin de commander l'appareil de gestion thermique ; ou
dans lequel le véhicule comprend en outre un climatiseur (207), une unité de commande pour le climatiseur étant intégrée dans la puce intégrée ; et
la puce intégrée est connectable au climatiseur via le module de conduite, et est configurée pour commander le module de conduite afin de commander le climatiseur ; ou
dans lequel le véhicule comprend en outre un radar de stationnement (209) ; le système comprend en outre une unité d'envoi de radar de stationnement et une unité de réception de radar de stationnement ;
une unité de commande du radar de stationnement est intégrée dans la puce intégrée ;
la puce intégrée peut être connectée à l'unité d'envoi de radar de stationnement, et est configurée pour commander l'unité d'envoi de radar de stationnement afin d'envoyer un signal de démarrage de radar de stationnement ;
la puce intégrée peut être connectée à l'unité de réception du radar de stationnement et est configurée pour commander l'unité de réception du radar de stationnement afin de recevoir des informations sur la distance de l'obstacle, dans laquelle les informations sur la distance de l'obstacle sont renvoyées par le radar de stationnement ; et
la puce intégrée est en outre configurée pour commander l'appareil de production de son afin qu'il émette ou non une tonalité d'alarme selon les informations relatives à la distance de l'obstacle.

10. Le système selon la revendication 9, dans lequel la puce intégrée, l'unité d'envoi du radar de stationnement et l'unité de réception du radar de stationnement sont intégrées dans une carte de circuit de commande.

11. Le système selon la revendication 4, dans lequel le véhicule comprend une clé intelligente (210), l'unité de commande de l'émetteur-récepteur de communication sans fil comprend une unité de commande de la clé intelligente, et.
la puce intégrée est connectable sans fil à la clé intelligente, est configurée pour commander l'émetteur-récepteur de communication sans fil pour recevoir une instruction de commande pour la clé intelligente et commander le véhicule selon l'instruction de commande, et ajuster, est en outre configuré pour commander l'émetteur-récepteur de communication sans fil pour envoyer un signal basse fréquence à la clé intelligente.

12. Le système selon la revendication 4, dans lequel le véhicule comprend un moniteur de pression des pneus (211), l'unité de commande de l'émetteur-récepteur de communication sans fil comprend une unité de surveillance de la pression, et
la puce intégrée est connectable sans fil au moniteur de pression des pneus, et est configurée pour commander l'émetteur-récepteur de communication sans fil afin de recevoir des informations sur la pression des pneus renvoyées par le moniteur de pression des pneus et de surveiller les informations sur la pression des pneus ; et
dans lequel l'émetteur-récepteur de communication sans fil comprend un récepteur haute fréquence ;
la puce intégrée est connectable au récepteur haute fréquence et est configurée pour commander le récepteur haute fréquence afin de recevoir un signal haute fréquence envoyé par un moniteur de pression des pneus du véhicule ; et
la puce intégrée est configurée pour obtenir des informations sur la pression des pneus selon le signal haute fréquence, et commander l'appareil d'affichage pour afficher les informations sur la pression des pneus.

13. Système selon la revendication 11, dans lequel l'émetteur-récepteur de communication sans fil (201) comprend un récepteur haute fréquence et un émetteur-récepteur basse fréquence ; l'unité de commande de la clé intelligente comprend une unité de commande de réception de signaux haute fréquence et une unité de commande d'envoi et de réception de signaux basse fréquence ;
la puce intégrée peut être connectée à l'émetteur-récepteur basse fréquence, et est configurée pour commander l'émetteur-récepteur basse fréquence afin d'effectuer une communication de signal basse fréquence avec la clé intelligente ;
la puce intégrée peut être connectée au récepteur haute fréquence et est configurée pour commander le récepteur haute fréquence afin de recevoir un signal haute fréquence ; et
la puce intégrée est configurée pour commander le véhicule selon un signal haute fréquence envoyé par la clé intelligente ;
ou
dans lequel l'émetteur-récepteur de communication sans fil comprend un module Bluetooth, et l'unité de commande de la clé intelligente comprend une unité de commande du module Bluetooth ; et
la puce intégrée est connectée au module Bluetooth, et est configurée pour commander le module Bluetooth afin d'établir une connexion avec la clé intelligente, et effectuer une communication Bluetooth avec la clé intelligente via le module Bluetooth.

14. Le système selon la revendication 4, comprend en outre un module d'alimentation (215) configuré pour alimenter le système de commande du véhicule, et une unité de commande pour le module d'alimentation est intégrée dans la puce intégrée ; et
la puce intégrée est connectée au module de puissance, et est configurée pour commander le module de puissance, et
dans lequel la puce intégrée et le module de puissance sont intégrés dans une carte de circuit de commande.

15. Système selon la revendication 4, dans lequel le système comprend en outre un module d'échantillonnage (213) ; et
la puce intégrée est connectée au module d'échantillonnage, et est configurée pour obtenir des informations acquises par le module d'échantillonnage ; et
dans lequel l'information acquise par le module d'échantillonnage comprend un signal de vitesse du véhicule ; et
la puce intégrée est configurée pour, lorsque le signal de vitesse du véhicule acquis par le module d'échantillonnage est supérieur ou égal à un seuil de vitesse prédéfini, commander à l'appareil de production de sons de faire retentir une tonalité d'invite à la simulation du moteur.

16. Système selon la revendication 4, dans lequel le véhicule (100) comprend en outre un appareil de gestion thermique (206), un climatiseur (207) et un radar de stationnement (209), et le système de commande du véhicule comprend en outre un module d'alimentation (215) configuré pour alimenter le système de commande du véhicule ;
la puce intégrée intègre en outre une unité de commande pour l'appareil de gestion thermique, une unité de commande pour le climatiseur, une unité de commande pour le radar de stationnement et une unité de commande pour le module de puissance ;
la puce intégrée est connectable à l'appareil de gestion thermique via le module de conduite, et est configurée pour commander le module de conduite afin de commander l'appareil de gestion thermique ;
la puce intégrée est connectable au climatiseur via le module de conduite, et est configurée pour commander le module de conduite afin de piloter le climatiseur ;
La puce intégrée est connectée à l'unité d'envoi du radar de stationnement et est configurée pour commander l'unité d'envoi du radar de stationnement afin d'envoyer un signal de démarrage du radar de stationnement ; la puce intégrée est connectée à l'unité de réception du radar de stationnement et est configurée pour commander l'unité de réception du radar de stationnement afin de recevoir des informations sur la distance de l'obstacle, dans lesquelles les informations sur la distance de l'obstacle sont renvoyées par le radar de stationnement ; la puce intégrée est en outre configurée pour commander l'appareil de production de son afin de déclencher ou non une alarme sonore selon les informations relatives à la distance de l'obstacle ; et
la puce intégrée est connectée au module d'alimentation et est configurée pour commander le module d'alimentation.

17. Le système selon la revendication 16, dans lequel la puce intégrée, le module de conduite, l'émetteur-récepteur de communication sans fil et l'émetteur-récepteur de passerelle sont intégrés dans une carte de circuit de commande, et la carte de circuit de commande intègre en outre une unité d'envoi de radar de stationnement, un module de réception de radar de stationnement, un module d'échantillonnage et un module d'alimentation.

18. Véhicule (200), comprenant un tableau de bord, un appareil produisant du son, un dispositif embarqué et un dispositif de commande de véhicule (500) comprenant un système de commande de véhicule (300) selon l'une quelconque des revendications 4 à 17, dans lequel
le dispositif de commande du véhicule est monté sur le tableau de bord, et le dispositif de commande du véhicule est connecté à l'appareil produisant le son et au dispositif embarqué, et
le véhicule comprend en outre un appareil de gestion thermique, un climatiseur, un radar de stationnement, une clé intelligente et un moniteur de pression des pneus ; et
le dispositif de commande du véhicule est connecté à l'appareil de gestion thermique, au climatiseur et au radar de stationnement, et est connecté sans fil à la clé intelligente et au moniteur de pression des pneus.
